# EUROPEAN PATENT SPECIFICATION

(11) **EP 2 473 455 B1**
(45) Date of publication and mention of the grant of the patent: **29.06.2016**
(21) Application number: 10771550.0
(22) Date of filing: 08.10.2010
(51) Int. Cl.: C03C 25/10, C03C 25/32, C09D 175/16, C08G 18/22, C08G 18/24, C08G 18/38, C08G 18/48, C08G 18/67, C08G 18/76, C08G 18/75

(54) **RADIATION CURABLE COATING FOR OPTICAL FIBER**
STRAHLUNGSHÄRTBARE BESCHICHTUNG FÜR GLASFASERN
REVÊTEMENT DURCISSABLE PAR RAYONNEMENT POUR FIBRE OPTIQUE

(30) Priority: 09.10.2009 US 250329 P; 09.10.2009 US 272596 P
(43) Date of publication of application: 11.07.2012
(73) Proprietor: DSM IP Assets B.V., 6411 TE Heerlen (NL)
(72) Inventor: WU, Xiaosong, Geneva IL 60134 (US); BISHOP, Timothy, Edward, Algonquin IL 60102 (US); ZIMMERMAN, John, Monroe, Crystal Lake IL 60014 (US); HAN, Long, St. Charles IL 60174 (US)
(74) Representative: V.O.
(86) International application number: PCT/US2010/002718
(87) International publication number: WO 2011/049607

(56) References cited:
- WO-A1-98/37030
- US-A1- 2001 025 062
- US-A1- 2003 021 943
- US-A1- 2004 022 511
- US-A1- 2007 203 258
- US-A1- 2008 226 909
- US-A1- 2008 226 913
- US-A1- 2008 226 915

## Description

### FIELD OF THE INVENTION

The present invention relates to a radiation curable optical fiber primary coating composition, and to an optical fibers coated with said coatings composition.

### BACKGROUND OF THE INVENTION

An optical fiber is a glass fiber that carries light along its length. Optical fibers are widely used in fiber-optic communications, which permits transmission over longer distances and at higher bandwidths (data rates) than other forms of communications. Fibers are used instead of metal wires because signals travel along them with less loss, and they are also immune to electromagnetic interference.

Light is kept in the core of the optical fiber by total internal reflection. This causes the fiber to act as a waveguide. Fibers which support many propagation paths or transverse modes are called multi-mode fibers (MMF), while those which can only support a single mode are called single-mode fibers (SMF). MMF generally have a larger core diameter, and are used for short-distance communication links and for applications where high power must be transmitted. SMF are used for most communication links longer than 550 meters (1800 ft).

Throughout this patent application, attenuation in fiber optics, also known as transmission loss, is defined as the reduction in intensity of the light beam (or signal) with respect to distance traveled through a transmission medium. Attenuation loss coefficients in optical fibers usually are reported using units of decibels per kilometer, abbreviated dB/km.

Attenuation is an important factor limiting the transmission of a digital signal across large distances. Thus, much research has gone into both limiting the attenuation and maximizing the amplification of the optical signal. Empirical research has shown that attenuation in optical fiber is caused primarily by both scattering and absorption.

In 1965, Charles K. Kao and George A. Hockham of the British company Standard Telephones and Cables (STC) were the first to promote the idea that the attenuation in optical fibers could be reduced below 20 dB/km, allowing fibers to be a practical medium for communication. They proposed that the attenuation in fibers available at the time was caused by impurities, which could be removed, rather than fundamental physical effects such as scattering. The crucial attenuation level of less than or equal to 20 dB/km was first achieved in 1970, by researchers Robert D. Maurer, Donald Keck, Peter C. Schultz, and Frank Zimar working for American glass maker Corning Glass Works, now Corning Incorporated. They demonstrated a fiber with 17 dB/km attenuation by doping silica glass with titanium. A few years later they produced a fiber with only 4 dB/km attenuation using germanium dioxide as the core dopant. Such low attenuations ushered in optical fiber telecommunications and enabled the Internet.

Optical fibers are typically coated with two or more radiation curable coatings. These coatings are typically applied to the optical fiber in liquid form, and then exposed to radiation to effect curing. The type of radiation that may be used to cure the coatings should be that which is capable of initiating the polymerization of one or more radiation curable components of such coatings. Radiation suitable for curing such coatings is well known, and includes ultraviolet light (hereinafter "UV") and electron beam ("EB"). The preferred type of radiation for curing coatings used in the preparation of coated optical fiber is UV.

The coating which directly contacts the optical fiber is called the primary coating, and the coating that covers the primary coating is called the secondary coating. It is known in the art of radiation curable coatings for optical fibers that primary coatings are advantageously softer than secondary coatings. One advantage flowing from this arrangement is enhanced resistance to microbends.

Microbends are sharp but microscopic curvatures in an optical fiber involving local axial displacements of a few micrometers and spatial wavelengths of a few millimeters. Microbends can be induced by thermal stresses and/or mechanical lateral forces. When present, microbends attenuate the signal transmission capability of the coated optical fiber. Thus for the success of optical fiber in a telecommunications network it is known that reducing microbends, reduces attenuation.

The relatively soft primary coating provides resistance to microbending of the optical fiber, thereby minimizing signal attenuation. The relatively harder secondary coating provides resistance to handling forces such as those encountered when the coated fiber is ribboned and/or cabled.

Coatings can provide lateral force protection that protects the optical fiber from microbending, but as coating diameter decreases the amount of protection provided decreases. The relationship between coatings and protection from lateral stress that leads to microbending is discussed, for example, in D. Gloge, "Optical-fiber packaging and its influence on fiber straightness and loss", Bell System Technical Journal, Vol. 54, 2, 245 (1975); W. B. Gardner, "Microbending Loss in Optical Fibers", Bell System Technical Journal, Vol. 54, No. 2, p. 457 (1975); T. Yabuta, "Structural Analysis of Jacketed Optical Fibers Under Lateral Pressure", J. Lightwave Tech., Vol. LT-1, No. 4, p. 529 (1983); L. L. Blyler, "Polymer Coatings for Optical Fibers", Chemtech, p. 682 (1987); J. Baldauf, "Relationship of Mechanical Characteristics of Dual Coated Single Mode Optical Fibers and Microbending Loss", IEICE Trans. Commun., Vol. E76-B, No. 4, 352 (1993); and K. Kobayashi, "Study of Microbending Loss in Thin Coated Fibers and Fiber Ribbons", IWCS, 386 (1993).

The article, "UV-CURED POLYURETHANE-ACRYLIC COMPOSITIONS AS HARD EXTERNAL LAYERS OF TWO-LAYER PROTECTIVE COATINGS FOR OPTICAL FIBRES", authored by W. Podkoscielny and B. Tarasiuk, Polim.Tworz.Wielk, Vol. 41, Nos. 7/8, p. 448-55, 1996, NDN-131-0123-9398-2, describes studies of the optimization of synthesis of UV-cured urethane-acrylic oligomers and their use as hard protective coatings for optical fibers. Polish-made oligoetherols, diethylene glycol, toluene diisocyanate (Izocyn T-80) and isophorone diisocyanate in addition to hydroxyethyl and hydroxypropyl (meth)acrylates were used for the synthesis. Active diluents (butyl acrylate, 2-ethylhexyl acrylate and 1,4-butanediol acrylate or mixtures of these) and 2,2-dimethoxy-2-phenylacetophenone as a photoinitiator were added to these urethane-acrylic oligomers which had polymerization-active double bonds. The compositions were UV-irradiated in an oxygen-free atmosphere. IR spectra of the compositions were recorded, and some physical and chemical and mechanical properties (density, molecular weight, viscosity as a function of temperature, refractive index, gel content, glass transition temperature, Shore hardness, Young's modulus, tensile strength, elongation at break, heat resistance and water vapor diffusion coefficient) were determined before and after curing. The article, "PROPERTIES OF ULTRAVIOLET CURABLE POLYURETHANE-ACRYLATES", authored by M. Koshiba; K. K. S. Hwang; S. K. Foley; D. J. Yarusso; and S. L. Cooper; published in J. Mat. Sci., 17, No. 5, May 1982, p. 1447-58; NDN-131-0063-1179-2; described a study that was made of the relationship between the chemical structure and physical properties of UV cured polyurethane-acrylates based on isophorone diisocyanate and TDI. The two systems were prepared with varying soft segment molecular weight and cross linking agent content. Dynamic mechanical test results showed that one- or two-phase materials might be obtained, depending on soft segment molecular weight. As the latter increased, the polyol Tg shifted to lower temperatures. Increasing using either N-vinyl pyrrolidone (NVP) or polyethylene glycol diacrylate (PECDA) caused an increase in Young's modulus and ultimate tensile strength. NVP cross linking increased toughness in the two-phase materials and shifted the high temperature Tg peak to higher temperatures, but PEGDA did not have these effects. Tensile properties of the two systems were generally similar.

Typically in the manufacture of radiation curable coatings for use on optical fiber, isocyanates are used to make urethane oligomers. In many references, including U.S. Pat. No. 7,135,229, "RADIATION-CURABLE COATING COMPOSITION", Issued Nov. 14, 2006, assigned to DSM IP Assets B.V., column 7, lines 10-32 the following teaching is provided to guide the person of ordinary skill in the art how to synthesize urethane oligomer: polyisocyanates suitable for use in making compositions of the present invention can be aliphatic, cycloaliphatic or aromatic and include diisocyanates, such as 2,4-toluene diisocyanate, 2,6-toluene diisocyanate, 1,3-xylene diisocyanate, 1,4-xylylene diisocyanate, 1,5-naphthalene diisocyanate, m-phenylene diisocyanate, *p*-phenylene diisocyanate, 3,3'-dimethyl-4,4'-diphenylmethane diisocyanate, 4,4'-diphenylmethane diisocyanate, 3,3'-dimethylphenylene diisocyanate, 4,4'-biphenylene diisocyanate, 1,6-hexane diisocyanate, isophorone diisocyanate, methylenebis(4-cyclohexyl)isocyanate, 2,2,4-trimethylhexamethylene diisocyanate, *bis*(2-isocyanate-ethyl)fumarate, 6-isopropyl-1,3-phenyl diisocyanate, 4-diphenylpropane diisocyanate, lysine diisocyanate, hydrogenated diphenylmethane diisocyanate, hydrogenated xylylene diisocyanate, tetramethylxylylene diisocyanate and 2,5(or 6)-*bis*(isocyanatomethyl)-bicyclo[2.2.1]heptane. Among these diisocyanates, 2,4-toluene diisocyanate, isophorone diisocyanate, xylene diisocyanate, and methylenebis(4-cyclohexylisocyanate) are particularly preferred. These diisocyanate compounds are used either individually or in combination of two or more.

Optical fiber secondary coating compositions generally comprise, before cure, a mixture of ethylenically-unsaturated compounds, often consisting of one or more oligomers dissolved or dispersed in liquid ethylenically-unsaturated diluents and photoinitiators. The coating composition is typically applied to the optical fiber in liquid form and then exposed to actinic radiation to effect cure.

In many of these compositions, use is made of a urethane oligomer having reactive termini and a polymer backbone. Further, the compositions generally comprise reactive diluents, photoinitiators to render the compositions UV-curable, and other suitable additives.

Published PCT Patent Application WO 2005/026228 A1, published Sep. 17, 2004, "Curable Liquid Resin Composition", with named inventors Sugimoto, Kamo, Shigemoto, Komiya and Steeman describes and claims a curable liquid resin composition comprising: (A) a urethane (meth)acrylate having a structure originating from a polyol and a number average molecular weight of 800 g/mol or more, but less than 6000 g/mol, and (B) a urethane (meth)acrylate having a stricture originating from a polyol and a number average molecular weight of 6000 g/mol or more, but less than 20,000 g/mol, wherein the total amount of the component (A) and component (B) is 20-95 wt % of the curable liquid resin composition and the content of the component (B) is 0.1-30 wt % of the total of the component (A) and component (B).

Many materials have been suggested for use as the polymer backbone for the urethane oligomer. For example, polyols such as hydrocarbon polyols, polyether polyols, polycarbonate polyols and polyester polyols have been used in urethane oligomers. Polyester polyols are particularly attractive because of their commercial availability, oxidative stability and versatility to tailor the characteristics of the coating by tailoring the backbone. The use of polyester polyols as the backbone polymer in a urethane acrylate oligomer is described, for example, in U.S. Pat. Nos. 5,146,531, 6,023,547, 6,584,263, 6,707,977, 6,775,451 and 6,862,392, as well as European Patent 539 030 A.

Concern over the cost, use and handling of urethane precursors has lead to the use of urethane-free oligomers in coating compositions. For example, urethane-free polyester acrylate oligomers have been used in radiation-curable coating compositions for optical glass fibers. Japanese Patent 57-092552 (Nitto Electric) discloses all optical glass fiber coating material comprising a polyester di(meth)acrylate where the polyester backbone has an average molecular weight of 300 or more. German Patent Application 04 12 68 60 A1 (Bayer) discloses a matrix material for a three-fiber ribbon consisting of a polyester acrylate oligomer, 2-(*N*-butyl-carbamyl)ethylacrylate as reactive diluent and 2-hydroxy-2-methyl-1-phenyl-propan-1-one as photoinitiator. Japanese Patent Application No. 10-243227 (Publication No. 2000-072821) discloses a liquid curable resin composition comprising a polyester acrylate oligomer which consists of a polyether diol end-capped with two diacids or anhydrides and terminated with hydroxy ethyl acrylate. U.S. Pat. No. 6,714,712 B2 discloses a radiation curable coating composition comprising a polyester and/or alkyd (meth)acrylate oligomer comprising a polyacid residue or an anhydride thereof, optionally a reactive diluent, and optionally a photoinitiator. Also, Mark D. Soucek and Aaron H. Johnson disclose the use of hexahydrophthalic acid for hydrolytic resistance in "New Intramolecular Effect Observed for Polyesters: An Anomeric Effect," JCT Research, Vol. 1, No. 2, p. 111 (April 2004).

The following U.S. Patents and U.S. Patent Applications describe and claim radiation curable coating compositions : U.S. Patent Application 11/955935, filed December 13, 2007, published as US 20080226916 on September 19, 2008; U.S. Patent Application 11/955838, filed December 13, 2007, published as US 20080241535 on October 23, 2008; U.S. Patent Application 11/955547, filed December 13, 2007, published as US 20080226912 on September 19, 2008; U.S. Patent Application 11/955614, filed December 13, 2007, published as US 20080226914 on September 19, 2008; U.S. Patent Application 11/955604, filed December 13, 2007, published as US 20080226913 on September 19, 2008; U.S. Patent Application 11/955721, filed December 13, 2007, published as US 20080233397 on September 25, 2008; U.S. Patent Application 11/955525, filed December 13, 2007, published as US 20080226911 on September 19, 2008; U.S. Patent Application 11/955628, filed December 13, 2007, published as US 20080226915 on September 19, 2008; U.S. Patent Number 6,014,488 issued on January 11, 2000 and U.S. Patent Application 11/955541, filed December 13, 2007, published as US 20080226909 on September 19, 2008.

US-A-2008/0 226 915 fails to disclose a coating composition as described herein having reactive diluent blend wherein each of the monomers comprises at least one phenyl group or phenoxy group and at least one acrylate group. It further fails to disclose a coating composition as described herein that has less than 0.4 % by weight of alkyl monomers that do not include a phenyl group or phenoxy group.

US-A-2004/0 022 511 fails to disclose a coating composition as described herein having 30-50 % by weight of the composition of reactive diluent monomer blend wherein each of the monomers comprises at least one phenyl group or phenoxy group and at least one acrylate group. It further fails to disclose a coating composition as described herein that has less than 0.4 % by weight of alkyl monomers that do not include a phenyl group or phenoxy group.

US-A-2008/0 226 909 fails to disclose a coating composition as described herein having 30-50 % by weight of the composition of reactive diluent monomer blend wherein each of the monomers comprises at least one phenyl group or phenoxy group and at least one acrylate group.

US-A-2007/0 203 258 fails to disclose a coating composition as described herein that has less than 0.4 % by weight of alkyl monomers that do not include a phenyl group or phenoxy group.

US-A-2008/0 226 913 discloses a secondary coating composition and does not disclose a primary coating composition as described herein that comprises 50-65 wt.% of an oligomer as described herein. It further fails to disclose a coating composition as described herein that has less than 0.4 % by weight of alkyl monomers that do not include a phenyl group or phenoxy group.

US-A-2003/0 021 943 fails to disclose coating composition as described herein that comprises an oligomer which is prepared using a polyether polyol having a molecular weight of 3500-1.0 000 g/mol. It further fails to disclose a coating composition as described herein that comprises 50-65 wt.% of the oligomer. Additionally, it fails to disclose a coating composition as described herein wherein the total amount of oligomer and reactive diluent monomer blend is from 85 % to 98 % by weight of the coating composition.

While a number of optical fiber coatings are currently available, it is desirable to provide novel optical fiber coatings which have improved manufacturing and/or performance properties relative to existing coatings.

One of the critical driving forces for the development of optical fiber coating technology is increased user demands on videos. For the existing technology of optical fiber coating, 2G network application is sufficient. However, the future networks, such as 3G, 4G, and IPTV, high definition television (HDTV), video conferencing and other high bandwidth applications will impose a higher requirement for the optical fiber, therefore the requirement on optical fiber coating will become higher and higher.

In order to meet the huge demand of video applications on the internet, the telecommunication network of next generation requires the support of transmission of greater capacity, longer distance and broader spectral range, and the performance of the current generation of optical fibers G652 was developed for long haul straight alignment utility; therefore G562 is not suitable to meet the requirements of Fiber to the Home (FTTH) challenges.

As optical transport of communication signals migrates into homes and MDUs, optical glass fibers are encountering tighter bends, requiring optical fiber producers to offer G657 Macrobend resistant fibers. At the same time, increasing demands for bandwidth are putting strains on the available margin in deployed networks.

As the demand for ever increasing bandwidth develops in the internet and current telecommunications devices, the demand for optical fiber that is attenuation resistant will also increase. As the demand for attenuation resistant optical fiber increases it would be desirable to have compositions suitable as radiation curable coatings for optical fiber that will reduce the amount of microbending in the optical fiber and thus, reduce the amount of attenuation in the telecommunications system incorporating the optical fiber.

### BRIEF SUMMARY OF THE INVENTION

The first aspect of the instant claimed invention is a radiation curable optical fiber primary coating composition comprising, in the uncured state, from 50 % to 65 % by weight of the composition, an oligomer comprising the reaction product of:
a) at least one polyether polyol having a molecular weight of from 3500 g/mol to 10000 g/mol,
b) at least one diisocyanate selected from the group consisting of an aromatic diisocyanate, an aliphatic diisocyanate, and mixtures thereof,
c) at least one hydroxyl terminated acrylate or (meth)acrylate, and
d) optionally, an alcohol;
   from 30 % to 50 % by weight of the composition, a reactive diluent monomer blend comprising at least two reactive diluent monomers, wherein each of said monomers in said blend comprises at least one phenyl group and at least one acrylate group, and having the formula: 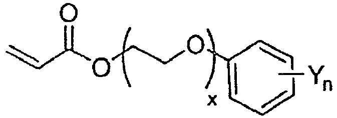 wherein x is an integer of from 1 to 6; n is an integer of from 1 to 5; and each Y, which may be the same or different, is independently selected from the group consisting of hydrogen, a C₁ to C₁₂ alkyl group, and an alkarylalkoxylated acrylate radical; and at least one photoinitiator; said reactive diluent monomer blend being substantially free of non-aryl reactive diluent monomers; wherein when an aryl reactive diluent monomer is present that has a molecular weight less than about 300, it is present at no more than about 10 wt.-% of the total formulation,
   wherein said primary composition includes, based on the weight of the composition, less than 0.4 % by weight of alkyl monomers that do not include a phenyl group or phenoxy group, and wherein the total amount of oligomer and reactive diluent monomer blend is from 85 % to 98 % by weight of the coating composition.

The second aspect of the instant claimed invention is the coating composition of the first aspect, wherein the polyol has a molecular weight of from 3500 g/mol to about 4500 g/mol.

The third aspect of the instant claimed invention is the coating composition of the first aspect, wherein the total amount of oligomer and reactive diluent monomer blend is from about 85% to about 98% by weight of the coating composition.

The fourth aspect of the instant claimed invention is the coating composition of the first aspect, wherein the diisocyanate is selected from the group consisting of an aromatic diisocyanate and an aliphatic diisocyanate.

The fifth aspect of the instant claimed invention is the coating composition of the first aspect, wherein the reaction product of the at least one polyol, at least one diisocyanate, at least one hydroxyl terminated acrylate or (meth)acrylate, and optionally an alcohol is a liquid at room temperature.

The sixth aspect of the instant claimed invention is the coating composition of the first aspect, wherein the photoinitiator is *bis*(2,4,6-trimethylbenzoyl)phenylphosphine oxide.

The seventh aspect of the instant claimed invention is the coating composition of the first aspect, wherein the reactive diluent monomers in the reactive diluent monomer blend have the formula: 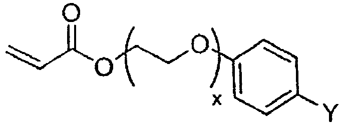 wherein x is from 1 to 6 and Y is independently selected from the group consisting of hydrogen, a C₁ to C₁₂ alkyl group, and an alkarylalkoxylated acrylate radical.

The eighth aspect of the instant claimed invention is the coating composition of the seventh aspect, wherein the reactive diluent monomer blend consists essentially of at least two monomers selected from the group consisting of ethoxylated nonylphenol acrylate, ethoxylated bisphenol A diacrylate and 2-phenoxyethyl acrylate.

The ninth aspect of the instant claimed invention is the coating composition of the eighth aspect, wherein the photoinitiator is *bis*(2,4,6-trimethylbenzoyl)phenylphosphine oxide.

The tenth aspect of the instant claimed invention is a radiation curable optical fiber primary coating composition comprising, in the uncured state, from 55 % to 65 % by weight of the composition an oligomer comprising the reaction product of:
a) at least one polyether polyol having a molecular weight of from 3500 g/mol to 10000 g/mol,
b) at least one diisocyanate selected from the group consisting of an aromatic diisocyanate, an aliphatic diisocyanate, and mixtures thereof,
c) at least one hydroxyl terminated acrylate or (meth)acrylate, and
d) and optionally, an alcohol;
   from 30 % to 50 % by weight of the composition, a reactive diluent monomer blend comprising at least two reactive diluent monomers, wherein each of said monomers in said blend comprises at least one phenyl group and at least one acrylate group, and having the formula: 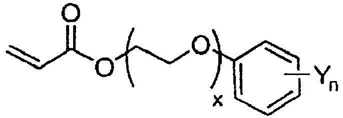 wherein x is an integer of from 1 to 6; n is an integer of 1 to 5; and each Y, which may be the same or different, is independently selected from the group consisting of hydrogen, a C₁ to C₁₂ alkyl group, and an alkarylalkoxylated acrylate radical; and at least one photoinitiator; said reactive diluent monomer blend being substantially free of a non-aryl reactive diluent monomers; wherein when an aryl reactive diluent monomer is present that has a molecular weight less than about 300, it is present at no more than about 10 wt.-% of the total formulation
   wherein said primary composition includes, based on the weight of the composition, less than 0.4 % by weight of alkyl monomers that do not include a phenyl group or phenoxy group, and wherein the total amount of oligomer and reactive diluent monomer blend is from 85 % to 98 % by weight of the coating composition.

The eleventh aspect of the instant claimed invention is the coating composition of the tenth aspect of the invention, wherein the reactive diluent monomer blend comprises from 30% to 42% by weight of the coating composition.

The twelfth aspect of the instant claimed invention is a radiation curable optical fiber primary coating composition comprising, in the uncured state, from 50% to 65% by weight of the composition an oligomer comprising the reaction product of:
a) at least one polyether polyol having a molecular weight of from 3500 g/mol to 10000 g/mol,
b) at least one diisocyanate selected from the group consisting of an aromatic diisocyanate, an aliphatic diisocyanate, and mixtures thereof,
c) at least one hydroxyl terminated acrylate or (meth)acrylate, and
d) optionally, an alcohol;
   from 30% to 50% by weight of the composition a reactive diluent monomer blend comprising at least two reactive diluent monomers, wherein each of said monomers in said blend comprises at least one phenoxy group and at least one acrylate group, and having the formula: 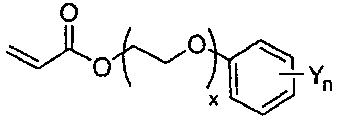 wherein x is an integer of from 1 to 6; n is an integer of from 1 to 5; and each Y, which may be the same or different, is independently selected from the group consisting of hydrogen, a C₁ to C₁₂ alkyl group, and an alkarylalkoxylated acrylate radical and at least one photoinitiator; said reactive diluent monomer blend being substantially free of a non-aryl reactive diluent monomers wherein when an aryl reactive diluent monomer is present that has a molecular weight less than about 300, it is present at no more than about 10 wt.-% of the total formulation,
   wherein said primary composition includes, based on the weight of the composition, less than 0.4 % by weight of alkyl monomers that do not include a phenyl group or phenoxy group, and wherein the total amount of oligomer and reactive diluent monomer blend is from 85 % to 98 % by weight of the coating composition.

The thirteenth aspect of the instant claimed invention is the composition of the twelfth aspect of the invention, wherein at least one polyol has a molecular weight of from 3 500 g/mol to 4500 g/mol.

The fourteenth aspect of the instant claimed invention is the composition of the twelfth aspect of the invention, wherein the total amount of the oligomer and the reactive diluent monomer blend is from 85% to 98% by weight of the coating composition.

The fifteenth aspect of the instant claimed invention is the composition of the twelfth aspect of the invention, wherein the diisocyanate is selected from the group consisting of a mixture of an aromatic diisocyanate and an aliphatic diisocyanate.

The sixteenth aspect of the instant claimed invention is the composition of the twelfth aspect of the invention, wherein the reaction product of the at least one polyol, at least one diisocyanate, at least one hydroxyl terminated acrylate or (meth)acrylate, and optionally an alcohol is a liquid at room temperature.

The seventeenth aspect of the instant claimed invention is the composition of the thirteenth aspect of the invention, wherein the diisocyanate is selected from the group consisting of a mixture of an aromatic diisocyanate and an aliphatic diisocyanate.

The eighteenth aspect of the instant claimed invention is the composition of the seventeenth aspect of the invention, wherein the reaction product of the at least one polyol, at least one diisocyanate, at least one hydroxyl terminated acrylate or (meth)acrylate, and optionally an alcohol is a liquid at room temperature.

The nineteenth aspect of the instant claimed invention is the composition of the eighteenth aspect of the invention, wherein the total amount of the oligomer and the reactive diluent monomer blend is from 85% to 98% by weight of the coating composition.

The twentieth aspect of the instant claimed invention is the composition of the nineteenth aspect of the invention, wherein the reactive diluent monomers in the reactive diluent monomer blend have the formula: 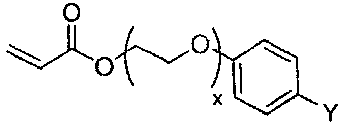 wherein x is from 1 to 6 and Y is independently selected from the group consisting of hydrogen, a C₁ to C₁₂ alkyl group, and an alkarylalkoxylated acrylate radical.

The twenty first aspect of the instant claimed invention is the composition of the twentieth aspect of the invention, wherein the reactive diluents monomer blend consists essentially of reactive diluent monomers selected from the group consisting of ethoxylated nonylphenol acrylate, ethoxylated bisphenol A diacrylate and 2-phenoxyethyl acrylate.

The twenty second aspect of the instant claimed invention is radiation curable optical fiber primary coating composition consisting essentially of, in the uncured state, from 50 % to 65% by weight of the composition, an oligomer consisting essentially of the catalyzed reaction product of:
a) at least one polyether polyol having a molecular weight of from 3500 g/mol to 10000 g/mol,
b) at least one diisocyanate selected from the group consisting of an aromatic diisocyanate and an aliphatic diisocyanate,
c) at least one hydroxyl terminated acrylate or (meth)acrylate, and
d) optionally, an alcohol;
   from 30% to 50% by weight of the composition, a reactive diluent monomer blend consisting essentially of at least two reactive diluent monomers, wherein each of said monomers in said blend comprises at least one phenyl group and at least one acrylate group, and having the formula: 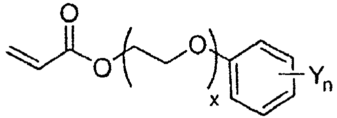 wherein x is an integer of from 1 to 6; n is an integer of from 1 to 5; and each Y, which may be the same or different, is independently selected from the group consisting of hydrogen, a C₁ to C₁₂ alkyl group, and an alkarylalkoxylated acrylate radical and at least one photoinitiator; said reactive diluent monomer blend being substantially free of a non-aryl reactive diluent monomers wherein when an aryl reactive diluent monomer is present that has a molecular weight less than about 300, it is present at no more than about 10 wt.-% of the total formulations,
   wherein said primary composition includes, based on the weight of the composition, less than 0.4 % by weight of alkyl monomers that do not include a phenyl group or phenoxy group, and wherein the total amount of oligomer and reactive diluent monomer blend is from 85 % to 98 % by weight of the coating composition.

The twenty third aspect of the instant claimed invention is the coating composition of any one of the first, tenth, twelfth or twenty second aspects of the instant claimed invention having, after cure on fiber, an *in-situ* modulus of from 0.1 MPa to 0.45 MPa.

The twenty fourth aspect of the instant claimed invention is the coating composition of any one of the first, tenth, twelfth or twenty second aspects of the instant claimed invention having, after cure on fiber, an *in-situ* Tg of less than 50 °C.

The twenty fifth aspect of the instant claimed invention is the coating composition of the twenty fourth aspect having an *in-situ* Tg of less than 55 °C.

The twenty sixth aspect of the instant claimed invention is the coating composition of any one of the first, tenth, twelfth or twenty second aspects of the instant claimed invention having, after cure as a film, an E' at -60 °C of up to 2100 MPa.

The twenty seventh aspect of the instant claimed invention is the coating composition of the twenty fifth aspect having an E' of from 1800 MPa to 2100 MPa.

The twenty eighth aspect of the instant claimed invention is the coating composition of any one of the first, tenth, twelfth or twenty second aspects of the instant claimed invention having, after cure on fiber, a tan (delta) of from 0.18 to 0.24.

Also disclosed is a twenty ninth, being an optical fiber coated with coating composition comprising, in the uncured state, from 50 % to 65% by weight of the composition, an oligomer comprising the reaction product of:
a) at least one polyether polyol having a molecular weight of from 3500 g/mol to 10000 g/mol,
b) at least one diisocyanate selected from the group consisting of an aromatic diisocyanate, an aliphatic diisocyanate, and mixtures thereof,
c) at least one hydroxyl terminated acrylate or (meth)acrylate, and
d) optionally, an alcohol;
   from 30% to 50% by weight of the composition, a reactive diluent monomer blend comprising at least two reactive diluent monomers, wherein each of said monomers in said blend comprises at least one phenyl group and at least one acrylate group, and having the formula: 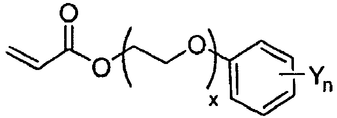 wherein x is an integer of from 1 to 6; n is an integer of from 1 to 5; and each Y, which may be the same or different, is independently selected from the group consisting of hydrogen, a C₁ to C₁₂ alkyl group, and an alkarylalkoxylated acrylate radical; said reactive diluent monomer blend being substantially free of a reactive diluent monomer devoid of a phenyl group; and at least one photoinitiator.

Also disclosed is a thirtieth aspect, being the optical fiber of the twenty ninth aspect, having a maximum microbending sensitivity at 1625 nm, at -60 °C, second cycle, of less than 0.2 dB/km.

Also disclosed is a thirty first aspect, being the optical fiber of the thirtieth aspect, having a maximum microbending sensitivity at 1625 nm, at -60 °C, second cycle, of from 0.01 to 0.15 dB/km.

Also disclosed is a thirty second aspect, being the optical fiber of the thirty first aspect, having a maximum microbending sensitivity at 1625 nm, at -60 °C, second cycle, of from about 0.012 to 0.146 dB/km.

The thirty third aspect of the instant claimed invention is the coating composition of any one of the first, tenth, twelfth or twenty second aspects of the instant claimed invention, wherein the at least one polyether polyol is polypropylene glycol having a molecular weight of about 4000 g/mol.

The thirty fourth aspect of the instant claimed invention is optical fiber coated with the primary coating composition of any one of the first, tenth, twelfth or twenty second aspects of the instant claimed invention.

The thirty fifth aspect of the instant claimed invention is optical fiber coated with the primary coating composition of any one of the first, tenth, twelfth or twenty second aspects of the instant claimed invention, wherein after initial cure and after one month aging at 85 °C and 85_% relative humidity, the % RAU is from 84% to 99%.

The thirty sixth aspect of the instant claimed invention is optical fiber coated with the primary coating composition of any one of the first, tenth, twelfth or twenty second aspects of the instant claimed invention having a maximum microbending sensitivity at 1625 nm, at -60 °C, second cycle, of from 0.012 to 0.146 dB/km.

The thirty seventh aspect of the instant claimed invention is a radiation curable optical fiber primary coating composition comprising, in the uncured state, from 50 % to 65 % by weight of the composition, an oligomer comprising the reaction product of:
a) at least one polyether polyol having a molecular weight of from 3500 g/mol to 10 000 g/mol,
b) at least one diisocyanate selected from the group consisting of an aromatic diisocyanate, an aliphatic diisocyanate, and mixtures thereof,
c) at least one hydroxyl terminated acrylate or (meth)acrylate, and
d) optionally, an alcohol;
   from 30 % to 50 % by weight of the composition, a reactive diluent monomer blend comprising at least two reactive diluent monomers, wherein each of said monomers in said blend comprises at least one phenyl group or phenoxy group, and at least one acrylate group, having the formula: 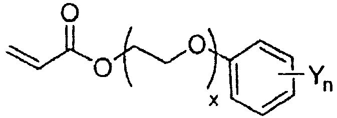 wherein x is an integer of from 1 to 6; n is an integer of from 1 to 5; and each Y, which may be the same or different, is independently selected from the group consisting of hydrogen, a C₁ to C₁₂ alkyl group, and an alkarylalkoxylated acrylate radical; said reactive diluent monomer blend being substantially free of non-aryl reactive diluent monomers; and at least one photoinitiator; wherein when an aryl reactive diluent monomer is present that has a molecular weight less than 300, it is present at no more than about 10 wt.-% of the total formulation
   wherein said primary composition includes, based on the weight of the composition, less than 0.4 % by weight of alkyl monomers that do not include a phenyl group or phenoxy group, and wherein the total amount of oligomer and reactive diluent monomer blend is from 85 % to 98 % by weight of the coating composition.

The thirty eighth aspect of the instant claimed invention is the coating composition of the thirty seventh aspect, wherein the polyol has a molecular weight of from 3500 g/mol to 4500 g/mol, preferably of about 4000 g/mol.

The thirty ninth aspect of the instant claimed invention is the coating composition of the thirty seventh or thirty eighth aspect, wherein the composition comprises, in the uncured state, from 55 % to 65 % by weight of the composition, of the oligomer.

The fortieth aspect of the instant claimed invention is the coating composition of any one of the thirty seventh to thirty ninth aspects, wherein the total amount of oligomer and reactive diluent monomer blend is from 85 % to 98 % by weight of the coating composition.

The forty first aspect of the instant claimed invention is the coating composition of any one of the thirty seventh to fortieth aspects wherein the at least one diisocyanate is selected from the group consisting of an aromatic diisocyanate, an aliphatic diisocyanate, and a mixture of an aromatic diisocyanate and an aliphatic diisocyanate.

The forty second aspect of the instant claimed invention is the coating composition of any one of the thirty seventh to forty first aspects, wherein the reaction product of the at least one polyol, at least one diisocyanate, at least one hydroxyl terminated acrylate or (meth)acrylate, and optionally an alcohol is a liquid at room temperature.

The forty third aspect of the instant claimed invention is the coating composition of any one of the thirty seventh to forty second aspects, wherein the photoinitiator is *bis*(2,4,6-trimethylbenzoyl)phenylphosphine oxide or 2,4,6-trimethylbenzoyldiphenylphosphine oxide.

The forty fourth aspect of the instant claimed invention is the coating composition of any one of the thirty seventh to forty third aspects, wherein the reactive diluent monomers in the reactive diluent monomer blend have the formula: 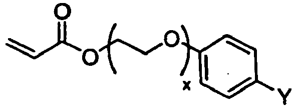 wherein x is from 1 to 6 and Y is independently selected from the group consisting of hydrogen, a C₁ to C₁₂ alkyl group, and an alkarylalkoxylated acrylate radical.

The forty fifth aspect of the instant claimed invention is the coating composition of any one of the thirty seventh to forty fourth aspects wherein the reactive diluent monomer blend consists essentially of at least two monomers selected from the group consisting of ethoxylated nonylphenol acrylate, ethoxylated bisphenol A diacrylate and 2-phenoxyethyl acrylate.

The forty sixth aspect of the instant claimed invention is the coating composition of any one of the thirty seventh to forty fifth aspects, wherein the reactive diluent monomer blend comprises from 30 % to 42 % by weight of the coating composition.

The forty seventh aspect of the instant claimed invention is the coating composition of any one of the thirty seventh to forty sixth aspects, further comprising at least one additive selected from the group consisting of an antioxidant, an adhesion promoter, a light stabilizer, an inhibitor, a latent acid and mixtures thereof

The forty eighth aspect of the instant claimed invention is the coating composition of any one of the thirty seventh to forty seventh aspects, wherein said coating composition has the following properties:
- an *in-situ* modulus of from 0.1 MPa to 0.45 MPa after cure on fiber,
- an *in-situ* Tg of less than -50 °C, preferably of less than -55 °C after cure on fiber, and/or
- a tan (delta) of from 0.18 to 0.24 after cure on fiber, and/or
- a storage modulus E' at -60 °C of up to 2100 MPa, preferably of from 1800 MPa to 2100 MPa, after cure as a film.

The forty ninth aspect of the instant claimed invention is an optical fiber coated with the coating composition of any one of the thirty seventh to forty eight aspects.

The fiftieth aspect of the instant claimed invention is the optical fiber of forty ninth aspect of the instant claimed invention, having a maximum microbending sensitivity at 1625 nm, at -60 °C, second cycle, of less than 0.2 dB/km, preferably of from 0.01 to 0.15 dB/km, more preferably of from 0.012 to 0.146 dB/km.

The fifty first aspect of the instant claimed invention is the optical fiber of the forty ninth aspect or the fiftieth aspect, wherein after initial cure and after one month aging at 85 °C and 85 % relative humidity, the % RAU is from 84 % to 99 %.

The invention provides novel light-curable compositions and, more particularly, novel compositions suitable for use as a radiation curable primary coating for optical fiber. The invention also provides optical fiber coated with the primary coating compositions described herein and cured as is known in the art.

Radiation curable primary coating compositions in accordance with the present invention comprise an oligomer, at least two reactive diluent monomers, and a photoinitiator.

The reactive diluent monomers are at times referred to herein as a reactive monomer blend or reactive monomer mixture. It will be appreciated by those skilled in the art, however, that the reactive monomers need not be blended or mixed before combining with the oligomer. Accordingly, the novel composition of the present invention does not depend on the order in which the components of the composition are mixed or blended together. Each of the reactive diluent monomers suitable for use in the composition of the invention includes at least one phenyl group or phenoxy group. Monomers that do not include a phenyl group or phenoxy group are typically understood in the art to be alkyl monomers. Alkyl monomers include, for example, alkyl acrylates including, for example, isodecyl acrylate (IDA), isobornyl acrylate (TBOA) and lauryl acrylate, and caprolactams, such as vinyl caprolactam. Alkyl monomers, including the alkyl acrylates, are volatile, and they typically impart slow cure speed to the composition. Volatile components are susceptible to evaporation from the coating during processing on the draw tower, which can result in unacceptable odor and deposits on the coating cups, dies, and the quartz tube surrounding the fiber. These deposits can lead to application difficulties and/or lower the degree of cure due to less UV light being transmitted through the quartz tube. Alkyl monomers also tend to be more crystalline than other monomers, which can lead to greater microbending, especially at lower temperatures. Alkyl monomers are thus not desirable reactive diluent monomers for use in the primary coating composition of the invention, and should be avoided, although minor amounts of such alkyl monomers can be tolerated. The primary coating compositions include, based on the weight of the composition, less than 0.4% by weight of alkyl monomers, preferably less than 0.3 % by weight alkyl monomers, preferably less than 0.2% by weight alkyl monomers and preferably, less than 0.1% by weight alkyl monomers. Thus, in the embodiment of the invention, the monomer blend is substantially free of a reactive diluent monomer devoid of a phenyl group or devoid of a phenoxy group.

Not wishing to be bound by theory, Applicants have discovered that preparing a radiation curable coating composition using an oligomer and the reactive diluent monomers described herein provides primary coating compositions with improved properties.

The present invention provides novel light-curable compositions, and more particularly, radiation curable compositions suitable for use as primary coatings for optical fiber. Applicants have discovered that the use of the primary coating compositions in accordance with the invention allows for the preparation of optical fiber coated with compositions of the invention which have, after cure, improved microbending sensitivity at low temperatures, lower volatility, and lower crystallinity as compared to conventional coatings. Thus, in another embodiment, the present invention provides optical fiber coated with a primary composition described herein. The primary coating compositions are applied and cured to form the optical fiber as is known in the art. Wet on wet and wet on dry processes for making optical fiber can be used.

The primary coating compositions of the present invention are particularly useful for single mode fiber and provides improved microbending performance to meet bandwidth demand and to diminish attenuation loss. The primary coating compositions of the present invention are useful at the following wavelengths: 1310 nm, 1490 nm, 1550 nm, and 1625 nm. The primary coating compositions minimize microbending sensitivity over a broad temperature range and offer broader manufacturing and installation tolerances. The primary coating compositions provide for reduced microbending sensitivity, are capable of being processed at high line speeds and exhibit stable properties under various environmental conditions.

### DETAILED DESCRIPTION OF THE INVENTION

The invention provides primary coating compositions having improved properties, uncured, and after curing, including the combination of low *in-situ* modulus, low Tg, fast cure speed, low volatility, and low crystallinity. These properties are achieved by the combination of the oligomer composition and monomers that comprise the composition. Photoinitiator(s) and additives are preferably included in the composition to improve cure speed, adhesion of the primary coating to the glass fiber and the like. The primary coating compositions of the invention give rise to superior microbending resistance to the coated fibers, even under the condition of low temperatures, such as at -60 °C.

In an embodiment, the invention provides a radiation curable optical fiber primary coating composition comprising an oligomer comprising at least one polyether polyol, at least one diisocyanate, at least one hydroxyl terminated acrylate or (meth)acrylate; a reactive diluent monomer blend comprising at least two reactive diluent monomers; and at least one photoinitiator. The composition can also include one or more additives, including antioxidants, adhesion promoters, light stabilizers, inhibitors, latent acids and photosensitizers.

In accordance with embodiments of the invention, each of the reactive diluent monomers comprises at least one phenyl group and at least one acrylate group and have the following formula: 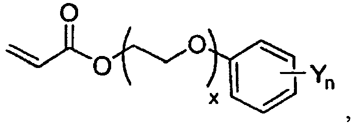 wherein x is an integer of from 1 to 6; n is an integer of from 1 to 5; and each Y, which may be the same or different, is independently selected from the group consisting of hydrogen, a C₁ to C₁₂ alkyl group, and an alkarylalkoxylated acrylate radical. The reactive diluent monomer blend or mixture is substantially free of alkyl monomers that do not have at least one phenyl group or at least one phenoxy group in the molecule. Preferably, each of the reactive diluent monomers alone includes a phenyl group or a phenoxy group, or each of the reactive diluent monomers that comprise the reactive diluent monomer blend, or that comprise the reactive diluent monomer mixture includes a phenyl group or a phenoxy group.

In an embodiment, the invention provides a radiation curable optical fiber primary coating composition consisting essentially of an oligomer consisting essentially of the catalyzed reaction product of at least one polyether polyol, at least one diisocyanate, at least one hydroxyl terminated acrylate, optionally an alcohol; a reactive diluent monomer blend consisting essentially of at least two reactive diluent monomers; at least one photoinitiator; and at least one additive. Preferably, the additive is selected from the group consisting of an antioxidant, an adhesion promoter, a light stabilizer, an inhibitor, a latent acid and mixtures thereof. Further, the composition can include more than one antioxidant, adhesion promoter, light stabilizer inhibitor or latent acid.

The oligomer in the primary coating composition has a high molecular weight to achieve a lower *in-situ* modulus and a low Tg. Since this results in slower cure speed, faster photoinitiator systems are preferred. The preferred photoinitiator is Irgacure 819 (BAPO). The polyether polyol has a low Tg, low viscosity, and non-crystallinity.

Throughout this application, the following abbreviations have the indicated meanings:

| | |
|---|---|
| A-189 | γ-mercaptopropyl trimethoxy silane available from Momentive |
| ACCLAIM 4200 | polypropylene glycol, MW = 4000, available from Bayer |
| BHT | 2,6-di-*tert*-butyl-4-methylphenol, available from Fitz Chem. |
| TPO | 2,4,6-trimethylbenzoyldiphenylphosphine oxide |
| Irgacure 819 | *bis*(2,4,6-trimethylbenzoyl)phenylphosphine oxide, available from Ciba Specialty Chemicals |
| CAS | means Chemical Abstracts Registry Number |
| DBTDL | dibutyl tin dilaurate, available from OMG Americas |
| HEA | hydroxyethyl acrylate, available from BASF |
| Irganox 1035 | thiodiethylene bis(3,5-di-tert-butyl-4-hydroxyphenyl)propionate), available from Ciba, Inc. |
| SR-349 | ethoxylated (3) bisphenol A diacrylate, available from Sartomer |
| SR-504D | ethoxylated nonyl phenol acrylate, available from Sartomer |
| IPDI | isophorone diisocyanate, available from Bayer |
| TDI | toluene diisocyanate, 80/20 mixture of 2,4- and 2,6-isomers; available from BASF |
| TDS | 100% 2,4-isomer of toluene diisocyanate, available from Bayer |
| Tinuvin 123 | *bis*(1-octyloxy-2,2,6,6-tetramethyl-4-piperidyl)sebacate, available from Ciba, Inc. |
| SR-339C | 2-phenoxyethyl acrylate, available from Sartomer |
| Thiocure® TMPMP | trimethylolpropane, tri-3-mercaptopropionate, available from Evans Chemetics LP |

Oligomers suitable for coating compositions of the invention are prepared by reaction of at least one polyether polyol, at least one diisocyanate, at least one hydroxyl terminated acrylate or (meth)acrylate, and optionally an alcohol. The following oligomer synthesis methods illustrate two different methods for synthesizing the oligomer. However, it will be appreciated by the skilled artisan that other synthesis methods also can be used so long as the oligomer comprises a urethane-backbone, with at least one terminal unsaturated group such as an alkenyl group or vinyl group.

Oligomer Synthesis - Method A is also known as an "outside-in" method that first reacts the isocyanate with hydroxyl terminated acrylate or methacrylate, followed by the reaction with polyol.

To a mixture of diisocyanate and inhibitor, HEA is added in a controlled manner so that the temperature does not exceed 40 °C. The mixture is allowed to react at 40 °C for 2 h so that the desired NCO content is reached. Polyol and catalyst are then added, and the mixture is allowed to react at 80 °C for 2 h or longer, until the NCO content is not greater than 0.10.

Oligomer Synthesis - Method B is also known as an "inside-out" method that first reacts the isocyanate with polyol, followed by the reaction with hydroxyl terminated acrylate or methacrylate.

Catalyst is added to a mixture of diisocyanate, polyol and inhibitor. The mixture is allowed to react at 60 °C for 2 h, so that the desired NCO content is reached. Then, HEA is added, and the mixture is allowed to react at 85 °C for 1_h or longer, until the NCO content is not greater than 0.05.

Polyether polyols suitable for preparing oligomers in accordance with the invention preferably are selected from the group consisting of a polyethylene glycol and a polypropylene glycol. In an embodiment, the polyether polyol is a polypropylene glycol.

Polypropylene glycol suitable for preparing oligomers in accordance with the invention has a molecular weight from 3500 g/mol to 10000 g/mol. In an embodiment, the polypropylene glycol has a molecular weight from 3500 g/mol to 8500 g/mol, more preferably from 3500 g/mol to 6500 g/mol. In a particularly preferred embodiment, polypropylene glycol has a molecular weight from 3500 g/mol to 4500 g/mol. An illustrative preferred polypropylene glycol is polypropylene glycol having a molecular weight of 4000 g/mol, known as ACCLAIM 4200, available from Bayer, which is a 4000-molecular weight diol based on propylene oxide. Thus, in keeping with the invention, polyether polyols, including polyethylene glycols and polypropylene glycols having a molecular weights of about 3500 g/mol, 4000 g/mol, 4500 g/mol, 5000 g/mol, 5500 g/mol, 6000 g/mol, 6500 g/mol, 7000 g/mol, 7500 g/mol, 8000 g/mol, 8000 g/mol, 8500 g/mol, 9000 g/mol, 9500 g/mol and 10000 g/mol are suitable.

In some embodiments, an oligomer can comprise more than one polyol. In keeping with the invention, when more than one polyol is used to prepare an oligomer, the average molecular weight of the polyol components is from 3500 g/mol to 10000 g/mol, preferably from 3500 g/mol to 8500 g/mol, more preferably from 3500 g/mol to 6500 g/mol, most preferably from 3500 g/mol to about 500 g/mol. For example, when more than one polyol is used, each of the polyols may have a molecular weight of from 3500 g/mol to 10000 g/mol, as described herein. Alternatively, in some embodiments when more than one polyol is used, at least one of the polyols having a molecular weight from 3500 g/mol to 10000 g/mol, as described herein, is used in an amount such that the average molecular weight of the polyol components is from 3500 g/mol to 10000 g/mol, as described herein.

In keeping with the invention, oligomers comprise an amount of polyether polyol suitable to impart a high molecular weight to the oligomer, for example, from 5000 g/mol to 11000 g/mol. Preferably, the molecular weight of the oligomer is from 6000 g/mol to 10000 g/mol, and more preferably from 6500 g/mol to 9500 g/mol. Aliphatic oligomers, that is, those prepared with aliphatic diisocyanates preferably have a molecular weight of from 6500 g/mol to 8000 g/mol. Thus, aliphatic oligomers having a molecular weight of about 6500 g/mol, about 7000 g/mol, about 7500 g/mol, about 8000 g/mol are suitable. Aromatic oligomers, that is, those prepared with aromatic diisocyanates preferably have a molecular weight of from 8500 to 9500 g/mol. Suitable aromatic oligomers have a molecular weight of about 8500 g/mol, 9000 g/mol and 9500 g/mol.

Radiation curable coating compositions comprise from 40 % to 60 %, or from 45% to 55%, by weight of a polyether polyol having a molecular weight of about 4000 g/mol. Suitable amounts of polyether polyol include about 40%, about 41%, about 42%, about 43%, about 44%, about 45%, about 46%, about 47%, about 48%, about 49%, about 50%, about 51%, about 52%, about 53%, about 54%, about 55%, about 56%, about 57%, about 58%, about 59%, and about 60% by weight. The polyether polyol is preferably polypropylene glycol. More preferably, the polyether polyol is polypropylene glycol having a molecular weight of about 4000 g/mol.

In an embodiment, the primary coating composition of the invention comprises about 53_% by weight of an approximately 4000 MW polypropylene glycol. For example, see Examples 1-4, wherein a polypropylene glycol content of 53.03% is suitable.

In an embodiment, the primary coating composition of comprises about 58% by weight of an approximately 4000 MW polypropylene glycol. For example, see Examples 13-16, wherein a polypropylene glycol content of 57.63% is suitable.

In an embodiment, the primary coating composition of comprises about 46% by weight of an approximately 4000 MW polypropylene glycol. For example, see Examples 5-12, wherein a polypropylene glycol content of 45.78% is suitable.

In an embodiment, the primary coating composition of comprises about 51% by weight of an approximately 4000 MW polypropylene glycol. For example, see Example 17, wherein a polypropylene glycol content of 50.91% is suitable.

Diisocyanates suitable for preparing oligomers of the invention may be of any suitable type, for example, aromatic diisocyanates or aliphatic diisocyanates, including mixtures thereof. Suitable diisocyanates are known in the art, and include, for example, isophorone diisocyanate (IPDI), toluene diisocyanate (TDI, mixture of 80% 2,4-isomer and 20% 2,6-isomer available from BASF and TDS, 100% 2,4-isomer of toluene diisocyanate).

The diisocyanate is selected from the group consisting of an aromatic diisocyanate, an aliphatic diisocyanate, and mixtures thereof.

In an embodiment, the diisocyanate is either an aromatic diisocyanate or an aliphatic diisocyanate, and not mixtures thereof.

Suitable aromatic diisocyanates include TDI and TDS. In an embodiment, the aromatic diisocyanate is TDS.

The hydroxyl terminated acrylate or (meth)acrylate used to prepare the oligomer is desirably a hydroxyalkyl (meth)acrylate such as hydroxyethyl acrylate (HEA), or an acrylate selected from the group consisting of polypropylene glycol monoacrylate (PPA6 available from ECEM), tripropylene glycol monoacrylate (TPGMA), caprolactone acrylates, and pentaerythritol triacrylate (e.g., SR444 available from Sartomer). In an embodiment, the hydroxyl terminated acrylate or (meth)acrylate preferably is HEA.

Radiation curable primary coating compositions of the invention comprise from 1 % to 5% of the hydroxyl terminated acrylate or (meth)acrylate. Suitable amounts of hydroxyl terminated acrylate or (meth)acrylate include about 1%, about 2%, about 3%, about 4%, and about 5% by weight.

In an embodiment, a coating composition of the invention comprises about 2.1% by weight of HEA. For example, see Examples 13, 14, and 15, wherein a HEA content of 2.12% (Example 13) and 2.09% (Examples 14 and 15) is suitable.

In another preferred embodiment, the primary coating composition comprises about 1.7% by weight of HEA. For example, see Examples 1-4, wherein a HEA content of 1.72% is suitable.

In yet another preferred embodiment, the primary coating composition comprises about 1.5% by weight of HEA. For example, see Example 17, wherein a HEA content of 1.48% is suitable.

In still yet another preferred embodiment, the primary coating composition comprises about 1.2% by weight of HEA. For example, see Examples 5-12, wherein a HEA content of 1.24% is suitable.

In still yet another preferred embodiment, the primary coating composition comprises about 1.8% by weight of HEA. For example, see Example 16, wherein a HEA content of 1.82% is suitable.

In some embodiments of the invention, an alcohol can be used to make the oligomer of the composition, preferably in combination with a hydroxyl terminated acrylate or methacrylate. Suitable alcohols include, but are not limited to, methanol, ethanol, propanol, butanol, hexanol, octanol, and the like. One effect of using an alcohol to synthesize the oligomer is to change the (meth)acrylate functionality of the urethane oligomer, thus impacting the modulus of the finished coating.

Catalysts for synthesizing urethane based oligomers for use in radiation curable coatings for optical fiber are known in the art. The catalyst is selected from the group consisting of copper naphthenate, cobalt naphthenate, zinc naphthenate, triethylamine, triethylenediamine, 2-methyltriethyleneamine, dibutyl tin dilaurate (DBTDL); metal carboxylates, including, but not limited to: organobismuth catalysts such as bismuth neodecanoate, CAS 34364-26-6; zinc neodecanoate, CAS 27253-29-8; zirconium neodecanoate, CAS 39049-04-2; and zinc 2-ethylhexanoate, CAS 136-53-8; sulfonic acids, including but not limited to dodecylbenzene sulfonic acid, CAS 27176-87-0; and methane sulfonic acid, CAS 75-75-2; amino or organo-base catalysts, including, but not limited to: 1,2-dimethylimidazole, CAS 1739-84-0; and diazabicyclo[2.2.2]octane (DABCO), CAS 280-57-9 (strong base); and triphenyl phosphine; alkoxides of zirconium and titanium, including, but not limited to zirconium butoxide, (tetrabutyl zirconate) CAS 1071-76-7; and titanium butoxide, (tetrabutyl titanate) CAS 5593-70-4; and ionic liquid phosphonium, imidazolium, and pyridinium salts, such as, but not limited to, trihexyl(tetradecyl)phosphonium hexafluorophosphate, CAS No. 374683-44-0; 1-butyl-3-methylimidazolium acetate, CAS No. 284049-75-8; and N-butyl-4-methylpyridinium chloride, CAS No. 125652-55-3; and tetradecyl(trihexyl) phosphonium.

All of these catalysts are commercially available.

The amount of catalyst used in the oligomer synthesis is from 0.01% to 3 %, based on the weight of the overall coating composition.

In an embodiment, the catalyst is DBTDL or is an organobismuth catalyst such as "COSCAT 83" proprietary organobismuth catalyst, available from CosChem.

The preparation of the oligomer is conducted in the presence of a polymerization inhibitor which is used to inhibit the polymerization of acrylate during the reaction. The polymerization inhibitor is selected from the group consisting of butylated hydroxytoluene (BHT), hydroquinone and derivatives thereof such as methylether hydroquinone and 2,5-dibutyl hydroquinone; 3,5-di-*tert*-butyl-4-hydroxytoluene; methyl-di-*tert*-butylphenol; 2,6-di-*tert*-butyl-*ρ*-cresol; and the like. In an embodiment, the polymerization inhibitor is BHT.

In an embodiment, the reaction product of the at least one polyol, at least one diisocyanate, at least one hydroxyl terminated acrylate or (meth)acrylate, and optionally an alcohol is a liquid at room temperature.

The amount of the oligomer in the coating composition was chosen, among other considerations, to yield a suitable viscosity of the coating and desired mechanical properties.

In keeping with the invention, the primary coating composition comprises, in the uncured state, an amount of oligomer to impart proper viscosity and desired mechanical properties to the coating composition. The primary coating composition comprises from 50% to 65% by weight of oligomer, and preferably from 55% to 60% by weight of oligomer. Suitable amounts of oligomer include about 50%, about 51%, about 52%, about 53%, about 54%, about 55%, about 56%, about 57%, about 58%, about 59%, about 60%, about 61 %, about 62%, about 63%, about 64%, and about 65%, by weight.

In an embodiment, the primary coating composition comprises at least 50% by weight of oligomer. For example, see Examples 5-8, wherein an oligomer content of 50.01% is suitable.

In another embodiment, the primary coating composition comprises at least 53% by weight of oligomer. For example, see Examples 13-17, wherein an oligomer content of 53.09% is suitable.

In yet another embodiment, the primary coating composition comprises at least 58% by weight of oligomer. For example, see Examples 1-4, wherein an oligomer content of 58.50% and 59.60% is suitable.

In still yet another embodiment, the primary coating composition comprises at least 65% by weight oligomer. For example, see Examples 9-12.

Radiation curable primary coating compositions comprise at least two reactive diluent monomers which are sometimes referred to as a reactive diluent monomer blend or a reactive diluent monomer mixture.

A type of reactive diluent monomer that can be used is a compound having an aryl, also known as an aromatic group. Particular examples of diluent monomers having an aromatic group include ethylene glycol phenyl ether acrylate, polyethylene glycol phenyl ether acrylate, polypropylene glycol phenyl ether acrylate, and alkyl-substituted phenyl derivatives of the above monomers, such as polyethylene glycol nonylphenyl ether acrylate. Illustrative preferred reactive diluent monomers are ethoxylated nonylphenol acrylate (e.g., Photomer 4066, available from Cognis; SR504D, available from Sartomer), ethoxylated bisphenol A diacrylate (e.g., SR349, available from Sartomer), and 2-phenoxyethyl acrylate, aka PEA (e.g., SR339, available from Sartomer). These aryl diluent monomers have different molecular weights. 2-phenoxyethyl acrylate, aka PEA, has a very low molecular weight, below 300 g/mol. 2-phenoxyethyl acrylate, aka PEA is known to be volatile, because of its low molecular weight. Therefore, it is important to note that when an aryl monomer of low molecular weight (300 g/mol or less; 250 g/mol or less; 200 g/mol or less) is present, the weight percent of this low molecular weight aryl monomer in the compositions of the instant claimed invention should be less than 10%.

Applicants have discovered that the use of two reactive diluent monomers in accordance with the invention, in a primary coating composition which is substantially free of reactive diluent monomers that do not have a phenyl or phenoxy group results in a primary coating composition having superior properties, including but not limited to, fast cure speed, low volatility, low odor and low crystallinity. To illustrate what happens when non-aryl diluent monomers are present in a coating as compared to what happens when only aryl monomers are present, see Comparative Examples 1-4. The Comparative Examples clearly show the deleterious effects of the presence of aliphatic diluent monomers illustrated by measuring slower gel time, increased volatility and/or increased odor and/or increased crystallinity.

In an embodiment, the reactive diluent monomers each has at least one phenyl group and at least one acrylate group.

In other embodiments, the reactive diluent monomer blend comprises two or three reactive diluent monomers, wherein each of the reactive diluent monomers has at least one phenyl group and at least one acrylate group.

By way of illustration, suitable reactive diluent monomers comprise at least one phenyl group and at least one acrylate group and have the formula: 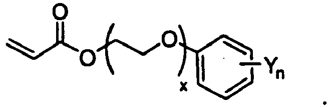 wherein x is an integer from 1 to 6, and preferably x is from 1 to 4. In preferred embodiments x is 1, 2, or 4.

In keeping with the invention, the phenyl ring of the reactive diluent monomer is substituted with at least one Y substituent, wherein n is the number of Y substitutents.

Typically, n is an integer from 0 to 5. In a particularly preferred embodiment, n is 1.

In accordance with the invention, Y substituents can occupy any suitable position on the phenyl ring. For example, when n is 1, the Y substituent can be *ortho-, meta-,* or *para-* to the ethoxylated acrylate moiety. In an embodiment, when n is 1, Yₙ is in the *para-* position.

Illustrative Y substituents include alkyl groups, and an alkarylalkoxylated acrylate radical, such as, for example, 4-(isopropyl-2-yl)-2-phenoxyethyl acrylate. In some embodiments, each Y is independently selected from the group consisting of a C₁ to C₁₂ alkyl group, and an alkarylalkoxylated acrylate radical.

Suitable C₁ to C₁₂ alkyl groups include linear and branched alkyl groups such as, for example, methyl, ethyl, propyl, butyl, pentyl, hexyl, heptyl, octyl, nonyl, decyl, undecyl, dodecyl, including *iso-, sec-, tert-*alkyl derivatives thereof.

The C₁ to C₁₂ alkyl group can be further substituted.

In an embodiment, the C₁ to C₁₂ alkyl group is C₉ alkyl, that is, nonyl.

By way of further illustration, the diluent monomer blend consists essentially of at least two monomers selected from the group consisting of ethoxylated nonylphenol acrylate, ethoxylated bisphenol A diacrylate, and 2-phenoxyethyl acrylate, that is, each of the monomers have the formula: 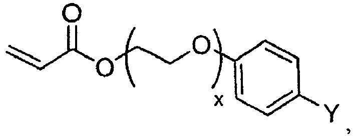 x is from 1 to 6 and Y is independently selected from the group consisting of hydrogen, a C₁ to C₁₂ alkyl group, and an alkarylalkoxylated acrylate radical.

In an embodiment, Y, x, and n are selected such that the reactive diluent monomers are selected from the group consisting of ethoxylated nonylphenol acrylate (e.g., SR504D), ethoxylated bisphenol A diacrylate (e.g., SR349), and 2-phenoxyethyl acrylate (e.g., SR 339).

It is important to note that when an aryl monomer of low molecular weight (300 g/mol or less; 250 g/mol or less; 200 g/mol or less) is present, the weight percent of this low molecular weight aryl monomer in the composition should be less than about 10 %.

In accordance with the invention, the at least two reactive diluent monomers comprise from 30% to about 50% by weight of the primary coating composition. In an embodiment, the coating composition comprises from between 30% and 42% of the reactive diluent monomers. Suitable amounts of the at least two reactive diluent monomers include about 30 %, about 31 %, about 32 %, about 33 %, about 34 %, about 35_%, about 36 %, about 37 %, about 38_%, about 39_%, about 40_%, about 41 %, about 42_%, about 43 %, about 44 %, about 45 %, about 46_%, about 47 %, about 48 %, about 49_%, and about 50 % by weight.

Radiation curable primary coating compositions of the invention comprise a photoinitiator. In an embodiment, the primary coatings comprise a single photoinitiator. In another embodiment, the primary coatings comprise a combination of photoinitiators. Suitable photoinitiators include α-hydroxyketo-type photoinitiators, phosphine oxide type photoinitiators, α-amino-ketone type photoinitiators, and benzil dimethyl-ketal type photoinitiators. A photosensitizer could also be included in the composition to improve the efficiency of the initiation. Suitable photosensitizers include, but not limited to, isopropylthioxanthone (ITX).

The α-hydroxyketo-type photoinitiators include 1-hydroxycyclohexyl phenyl ketone (e.g., Irgacure 184, available from Ciba Specialty Chemicals; Chivacure 184, available from Chitec Chemicals), 2-hydroxy-2-methyl-1-phenyl-propan-1-one (e.g., Darocur 1173, available from Ciba Specialty Chemicals), 2-benzyl-2-dimethylamino-1-(4-morpholinophenyl)-butan-1-one, 2,2-dimethoxy-2-phenyl-acetophenone, 2-methyl-1-[4-(methylthio)phenyl]-2-(4-morpholinyl)-1-propanone, 2-methyl-1-(4-(methylthio)phenyl-2-morpholinopropan-1-one (e.g., Irgacure 907, available from Ciba Specialty Chemicals), 4-(2-hydroxyethoxy)phenyl-2-hydroxy-2-propyl ketone dimethoxy-phenylacetophenone, 1-(4-isopropylphenyl)-2-hydroxy-2-methyl-propan-1-one, 1-(4-dodecylphenyl)-2-hydroxy-2-methylpropan-1-one, and 4-(2-hydroxyethoxy)phenyl-2-(2-hydroxy-2-propyl)ketone.

Phosphine oxide type photoinitiators include 2,4,6-trimethylbenzoyl-diphenylphosphine oxide type (TPO; e.g., Lucirin TPO available from BASF; Darocur TPO, available from Ciba Specialty chemicals), and 2,4,6-trimethylbenzoyl phenyl, ethoxy phosphine oxide (TPO-L e.g. Lucirin TPO-L from BASF) or monoacyl phosphine oxide (MAPO), bis(2,4,6-trimethylbenzoyl)phenylphosphine oxide (e.g., Irgacure 819, available from Ciba Specialty Chemicals), or bisacyl phosphine oxide type (BAPO) photoinitiators, and combination of both (modified) MAPO and (modified) BAPO (e.g. Irgacure 2100 available from Ciba Specialty Chemicals).

In an embodiment, the photoinitiator is *bis*(2,4,6-trimethylbenzoyl)phenylphosphine oxide.

In another preferred embodiment, the photoinitiator is 2,4,6-trimethylbenzoyl-diphenylphosphine oxide.

In keeping with the invention, primary coating compositions comprise oligomer and reactive diluent monomers as described herein sufficient to impart the desired *in-situ* tube Tg, *in-situ* modulus, E' (storage modulus), low temperature tan (delta), low volatility and absence of crystallinity to the uncured coating composition, and to the then cured coating prepared from the composition. Optical fiber coated with the primary coating compositions of the present invention exhibit improved maximum microbending sensitivity, even at 1625 nm, and at -60 °C.

The total amount of oligomer and reactive diluent monomer blend is from 85% to 98% by weight of the coating composition. Suitable amounts of the oligomer and reactive diluent monomer blend include about 85 %, about 86 %, about 87 %, about 88 %, about 89 %, about 90 %, about 91 %, about 92 %, about 93 %, about 94 %, about 95 %, about 96 %, about 97 %, and about 98 % by weight.

In another preferred embodiment, the total amount of oligomer and reactive diluent monomer blend is about 98 % by weight of the coating composition. For example, see in this Example, wherein a total amount of oligomer and reactive diluent monomer blend of 97.7 % is suitable.

In yet another preferred embodiment, the total amount of oligomer and reactive diluent monomer blend is about 97 % by weight of the coating composition. For example, see the Examples wherein more than one example has a total amount of oligomer and reactive diluent monomer blend of 96.55 % (Examples 1, 3, and 13-16) and 97.21 % (Examples 5-12) are suitable.

In still yet another preferred embodiment, the total amount of oligomer and reactive diluent monomer blend is about 96 % by weight of the coating composition. For example, see the Examples wherein more than one example has a total amount of oligomer and reactive diluent monomer blend of 96.2 % is suitable.

In keeping with the invention, various additives and combinations of additives can be included in the primary coating compositions additives. Suitable additives include, for example, an antioxidant, an adhesion promoter, a light stabilizer, an inhibitor, a latent acid, and mixtures thereof.

Suitable antioxidants are sterically hindered phenolic compounds, for example 2,6-di-*tert*-butyl-4-methylphenol, 2,6-di-*tert*-butyl-4-ethyl phenols 2,6-di-*tert*-butyl-4-*n*-butyl phenol, 4-hydroxymethyl-2,6-di-*tert*-butyl phenol, and such commercially available compounds as thiodiethylene bis(3,5-di-*tert*-butyl-4-hydroxyl)hydrocinnamate, octadecyl-3,5-di-*tert*-butyl-4-hydroxyhydrocinnamate, 1,6-hexamethylene bis(3,5-di-*tert*-butyl-4-hydroxyhydrocinnamate), and *tetrakis*(methylene(3,5-di-*tert*-butyl-4-hydroxyhydrocinnamate))methane, all available as Irganox 1035, 1076, 259 and 1010, respectively, from Ciba Inc.. Other examples of sterically hindered phenolics useful herein include 1,3,5-trimethyl-2,4,6-tris(3,5-di-*tert*-butyl-4-hydroxybenzyl)benzene and 4,4'-methylene-*bis*(2,6-di-*tert*-butylphenol), available as Ethyl 330 and 702, respectively, from Ethyl Corporation. In an embodiment, the antioxidant is thiodiethylene *bis(3,5-*di*-tert-butyl-*4-hydroxyl)hydrocinnamate.

Suitable adhesion promoters include *bis*(triethoxysilylpropyl)disulfide, *bis*(triethoxysilylpropyl)tetrasulfide, γ-aminopropyltriethoxysilane, γ-glycidoxypropyltrimethoxysilane, γ-mercaptopropyltriethoxysilane, γ-mercaptopropyltrimethoxysilane (e.g., Silquest A-189, available from Momentive Performance Materials, Inc.), γ-methacryloxypropyltriethoxysilane, γ-methacryloxypropyltrimethoxysilane, γ-ureidopropylltrimethoxysilane, methyl*tris*(isopropenoxy)silane, *N*-β-(aminoethyl)-γ*-*aminopropyltrimethoxysilane, (*N,N-*dimethyl-3-aminopropyl)silane, polydimethylsiloxane, vinyltriethoxysilane, *tris*(3-(trimethoxysilyl)propyl)isocyanurate, or a combination thereof. In an embodiment, the adhesion promoter is γ-mercaptopropyltrimethoxysilane.

Suitable light stabilizers are known in the art of radiation curable coatings and are commercially available and include ultraviolet light absorbers belonging to the benzophenone class of UVA's, including 2-hydroxy-4-methoxybenzophenone (e.g., Lowilite 20, available from Chemtura Corp.) and hindered amine light stabilizers (HALS), including *bis*(1-octyloxy-2,2,6,6-tetramethyl-4-piperidyl)sebacate (e.g., Tinuvin 123, available from Ciba Inc.). In an embodiment, the light stabilizer is *bis*(1-octyloxy-2,2,6,6-tetramethyl-4-piperidyl)sebacate.

Suitable polymerization inhibitors include butylated hydroxytoluene (BHT), hydroquinone and derivatives thereof such as methylether hydroquinone and 2,5-dibutyl hydroquinone; 3,5-di-*tert*-butyl-4-hydroxytoluene; methyl-di-*tert*-butylphenol; 2,6-di-*tert-*butyl-*p*-cresol; and the like. In an embodiment, the polymerization inhibitor is BHT.

Latent acids can be included in the composition. A latent acid is a chemical that is not an acid by itself, however, when undergoing certain transformation(s), it becomes an acid. One example of such transformations is oxidation.

In an embodiment, the latent acid is trimethylolpropane, tri-3-mercaptopropionate, available as THIOCURE®TMPMP.

In an embodiment of the oligomer is as follows, with weight percent reported based on the weight percent of the coating composition: hydroxyl-terminated acrylate or (meth)acrylate (e.g., HEA): 1 to 3 weight percent; aromatic diisocyanate (e.g., TDI): 2 to 4 weight percent; polyether polyol (e.g., ACCLAIM 4200): 40 to 60 weight percent; catalyst (e.g., DBTDL): 0.01 to 0.05 weight percent; and polymerization inhibitor (e.g., BHT): 0.05 to 0.10 weight percent.

In another embodiment, the oligomer is as follows, with weight percent reported based on the weight percent of the components used to prepare the oligomer: hydroxyl-terminated acrylate or (meth)acrylate (e.g., HEA): 1 to 3 weight percent; aliphatic diisocyanate (e.g., IPDI): about 4 to 6 weight percent; polyether polyol (e.g., ACCLAIM 4200): 40 to 60 weight percent; and catalyst (e.g., DBTDL): 0.01 to 0.05 weight percent; and polymerization inhibitor (e.g., BHT): 0.05 to 0.10 weight percent.

The following examples further illustrate the invention

### EXAMPLES 1-4

These examples illustrate a primary coating composition in accordance with the present invention.

| | **Ex.1** | **Ex. 2** | **Ex. 3** | **Ex. 4** |
|---|---|---|---|---|
| **Material Description** | **wt. %** | **wt. %** | **wt. %** | **wt. %** |
| *Oligomer* | | | | |
| ACCLAIM polyol 4200 | 51.68 | 53.03 | 53.03 | 53.03 |
| 2,6-di-*tert*-butyl-*p*-cresol | 0.09 | 0.09 | 0.09 | 0.09 |
| IPDI | 4.76 | 4.73 | 4.73 | 4.73 |
| dibutyl tin dilaurate | 0.03 | 0.03 | 0.0 | 0.03 |
| zinc neodecanoate | 0.0 | 0.0 | 0.03 | 0.0 |
| dodecylbenzene sulfonic acid | 0.0 | 0.0 | 0.00 | 0.0 |
| 2-HEA | 1.94 | 1.72 | 1.72 | 1.72 |
| **Total Oligomer wt. %** | **58.50** | **59.60** | **59.60** | **59.60** |
| | | | | |
| IRGACURE 819 | 1.50 | 1.50 | 1.50 | 2.00 |
| IRGANOX 1035 | 0.60 | 0.60 | 0.60 | 0.60 |
| TINUVIN 123 | 0.10 | 0.10 | 0.10 | 0.10 |
| ethoxylated nonyl phenol acrylate | 34.05 | 26.45 | 26.45 | 26.10 |
| SR 349D Monomer | 1.00 | 1.50 | 1.50 | 1.50 |
| PEA | 3.00 | 0.0 | 0.0 | 0.0 |
| SR 339C | 0.00 | 9.00 | 9.00 | 9.00 |
| THIOCURE TMPMP | 0.75 | 0.75 | 0.75 | 0.6 |
| A-189 | 0.50 | 0.50 | 0.50 | 0.50 |
| | | | | |
| **Total (due to rounding may be +/-0.10 wt. %)** | **100.00** | **100.00** | **100.00** | **100.00** |

### EXAMPLES 5-8

These examples illustrate a primary coating composition in accordance with the present invention.

| | **Ex. 5** | **Ex. 6** | **Ex. 7** | **Ex. 8** |
|---|---|---|---|---|
| **Material Description** | **wt. %** | **wt. %** | **wt. %** | **wt. %** |
| *Oligomer* | | | | |
| ACCLAIM polyol 4200 | 45.78 | 45.78 | 45.78 | 45.78 |
| acrylic acid, 99 % | 0.01 | 0.01 | 0.01 | 0.01 |
| BHT | 0.04 | 0.04 | 0.04 | 0.04 |
| Mondur TDS Grade II (available from Bayer | 2.92 | 2.92 | 2.92 | 2.92 |
| dibutyltin dilaurate | 0.02 | 0.0 | 0.0 | 0.02 |
| zinc neodecanoate | 0.0 | 0.02 | 0.0 | 0.0 |
| dodecylbenzene sulfonic acid | 0.0 | 0.0 | 0.02 | 0.0 |
| 2-HEA | 1.24 | 1.24 | 1.24 | 1.24 |
| **Total Oligomer wt. %** | **50.01** | **50.01** | **50.01** | **50.01** |
| | | | | |
| IRGANOX 1035 | 0.50 | 0.50 | 0.50 | 0.50 |
| SR-504D | 46.29 | 46.29 | 46.29 | 46.29 |
| SR 349D | 0.91 | 0.91 | 0.91 | 0.91 |
| TINUVIN 123 | 0.10 | 0.10 | 0.10 | 0.10 |
| IRGACURE 819 | 1.20 | 1.20 | 1.20 | 0.0 |
| TPO | 0.0 | 0.0 | 0.0 | 1.20 |
| A-189 | 0.99 | 0.99 | 0.99 | 0.99 |
| | | | | |
| **Total (due to rounding may be +/- 0.10 wt. %)** | **100.00** | **100.00** | **100.00** | **100.00** |

### EXAMPLES 9-12

These examples illustrate a primary coating composition in accordance with the present invention.

| | **Ex. 9** | **Ex.10** | **Ex. 11** | **Ex.12** |
|---|---|---|---|---|
| **Material Description** | **wt. %** | **wt. %** | **wt. %** | **wt. %** |
| *Oligomer* | | | | |
| ACCLAIM polyol 4200 | 57.47 | 57.44 | 57.44 | 57.18 |
| BHT | 0.1 | 0.1 | 0.1 | 0.1 |
| IPDI | 5.25 | 5.25 | 5.25 | 5.25 |
| dibutyltin dilaurate | 0.03 | 0.03 | 0.03 | 0.03 |
| zinc neodecanoate | 0.0 | 0.03 | 0.0 | 0.15 |
| dodecylbenzene sulfonic acid | 0.0 | 0.0 | 0.03 | 0.15 |
| 2-HEA | 2.15 | 2.15 | 2.15 | 2.14 |
| **Total Oligomer wt. %** | **65.00** | **65.00** | **65.00** | **65.00** |
| | | | | |
| SR-504D | 21.55 | 21.55 | 21.55 | 21.55 |
| SR 339C | 9 | 9 | 9 | 9 |
| SR 349D | 1 | 1 | 1 | 1 |
| IRGACURE 819 | 1.5 | 0.0 | 0.75 | 0.5 |
| TPO | 0.0 | 1.5 | 0.75 | 1.00 |
| IRGANOX 1035 | 0.6 | 0.6 | 0.6 | 0.6 |
| TINUVIN 123 | 0.1 | 0.1 | 0.1 | 0.1 |
| A-189 | 1.25 | 1.25 | 1.25 | 1.25 |
| | | | | |
| **Total (due to rounding may be +/-0.10 wt. %)** | **100.00** | **100.00** | **100.00** | **100.00** |

### EXAMPLE 13-17

This example illustrates a primary coating composition in accordance with the present invention.

| | **Ex. 13** | **Ex. 14** | **Ex. 15** | **Ex. 16** | **Ex. 17** |
|---|---|---|---|---|---|
| **Material Description** | **wt. %** | **wt. %** | **wt. %** | **wt. %** | **wt. %** |
| *Oligomer* | | | | | |
| 2,4-TDI | 3.38 | 3.43 | 4.34 | 3.53 | 3.6 |
| 2,6-di-*tert*-butyl-*p*-cresol | 0.05 | 0.05 | 0.04 | 0.05 | 0.05 |
| acrylic acid | 0.01 | 0.01 | 0.02 | 0.01 | 0.01 |
| 2-HEA | 1.46 | 1.48 | 1.48 | 1.3 | 1.48 |
| ACCLAIM polyol 4200 | 50.10 | 50.10 | 50.00 | 48.17 | 50.41 |
| dibutyl tin dilaurate | 0.03 | 0.03 | 0.03 | 0.03 | 0.03 |
| **Total Oligomer wt. %** | 55.91 | 55.91 | 55.91 | 53.09 | 55.58 |
| | | | | | |
| ethoxylated nonyl phenol acrylate | 40.29 | 40.29 | 40.29 | 42.71 | 40.29 |
| SR 349D | 1.50 | 1.50 | 1.50 | 1.7 | 1.2 |
| TPO | 1.70 | 0.0 | 1.60 | 1.7 | 0.9 |
| IRGACURE® 819 | | 1.70 | | 0.5 | 0.5 |
| IRGANOX 1035 | 0.50 | 0.50 | 0.50 | 0.3 | 1.5 |
| TINUVIN 123 | 0.10 | 0.10 | 0.10 | 0.1 | 0.03 |
| A-189 | 0.90 | 0.9 | 0.80 | 0.90 | 0.90 |
| **Total (due to rounding may be +/- 0.10 wt. %)** | **100.00** | **100.00** | **100.00** | **100.00** | **100.00** |

It has been discovered that the primary coating compositions of the invention have an *in-situ* modulus on fiber in the range of from 0.1 MPa to 0.45 MPa and an *in-situ* (tube) Tg of less than 50 °C, and preferably less than 55 °C. Optical fiber made using the primary coating compositions of the present invention have been found to exhibit a maximum microbending sensitivity (dB/km) at 1625 nm, at -60 °C, second cycle, of less than 0.2, and typically in the range of from 0.01 to 0.15.

Methods used to test for microbending sensitivity are described in IEC TR 62221, First Edition 10-2001. There are currently four test methods used to determine microbending sensitivity, which is reported in attenuation units of dB/km.

Method A-Expandable Drum calls for at least 400 m of fiber to be wound with minimal tension around an expandable drum with material of fixed roughness on the drum surface. Method B -Fixed-Diameter Drum calls for at least 400 m of fiber to be wound with 3N tension around a fixed-diameter drum with material of fixed roughness on the drum surface. Method C -Wire Mesh calls for application of wire mesh (under load) to the fiber under Test. Method D-Basketweave calls for 2.5 km of fiber to be applied to a fixed diameter drum via a "basketweave" wrap.

Of these four test methods, only Method D, specifically describes a procedure to measure the microbending sensitivity of fibers as a function of temperature and provides the microbending sensitivity over a wide temperature range and suggests that temperature cycling could include lower temperatures such as -60 °C.

Throughout this patent application, microbending sensitivity using test Method D-Basketweave will be spoken of in terms of less than a numerical value of dB lost per kilometer of fiber (dB/km) at a specified wavelength and temperature.

It has also been found that the primary coatings of the present invention have, as measured on cured film, an E' (storage modulus) at -60 °C of less than 2100 MPa, and generally, from 1800 MPa to 2100 MPa.

It has also been found that primary coating compositions of the present invention exhibit a tan(delta )that is relatively high, even at low temperature. While not wishing to be bound to any particular theory, it is believed that the relatively high tan (delta) of the primary coating compositions of the present invention improves the stress relaxation rate of the coating, which, it is believed, improves the decrease in attenuation loss. A decrease in attenuation loss has been observed with the primary coating compositions of the invention.

Thus, the present invention provides, in another embodiment, primary coating compositions which have, as measured on cured fibers, a tan (delta) of from 0.18 to 0.24. It has also been found that while maximum microbending sensitivity in dB/km at 1625 nm, and -60 °C, second cycle, can be influenced by the glass component of the optical fiber and by the secondary coating, in general, the primary coating compositions of the invention have a maximum microbending induced loss in dB/km at 1625 nm, and -60 °C second cycle of from 0.012 to 0.146. The E' and tan(delta) are obtained by a temperature scan of cured film by a dynamic mechanical analyzer. The DMA test method is known in the art, and is described, for example, in U.S. Patent 7,076,1.42.

It is known that the properties of the cured coating composition can be affected by the degree of cure of the composition on fiber, and one way to measure the degree of cure is by measuring the amount of reacted acrylate unsaturation (RAU) in the coating on optical fiber. The primary coating compositions of the invention are preferably cured to at least 70 % RAU, with a higher degree of cure being more preferred. For example, cure as measured by % RAU, is preferably of from 84% RAU to 99% RAU, and more preferably from 87% RAU to 95% RAU. A degree of cure that minimizes post cure, for example, dark reactions that have been referred to in the literature, that may occur after the initial cure when the fiber is made, such as, during cabling, storage or the like, is most desirable in order to avoid changes in the physical, chemical and mechanical properties of the cured fiber. Cures measured as a % RAU of about 84 %, about 85 %, about 86 %, about 87 %, about 88 %, about 89 %, about 90 %, about 91 %, about 92 %, about 93 %, about 94 %, about 95 %, about 96 %, about 97 %, about 98 % and about 99 % have been found suitable.

Optical fiber comprising cured primary coating, in one embodiment of the invention, has a % RAU of 84% to 99% after initial cure and after one month aging at 85 °C and 85 % relative humidity. It will be understood by one of ordinary skill, that when % RAU of optical fiber is evaluated in this manner, the optical fiber comprises at least two layers, wherein the first layer is a primary coating that is in contact with the outer surface of the optical fiber and the second layer is a secondary coating in contact with the outer surface of the primary coating.

As mentioned previously in this patent application, to illustrate what happens when non-aryl diluent monomers are present in a coating as compared to what happens when only aryl monomers are present, see Comparative Examples 1-4. The Comparative Examples clearly show the deleterious effects of the presence of aliphatic diluent monomers illustrated by measuring slower gel time, increased volatility and/or increased odor and/or increased crystallinity.

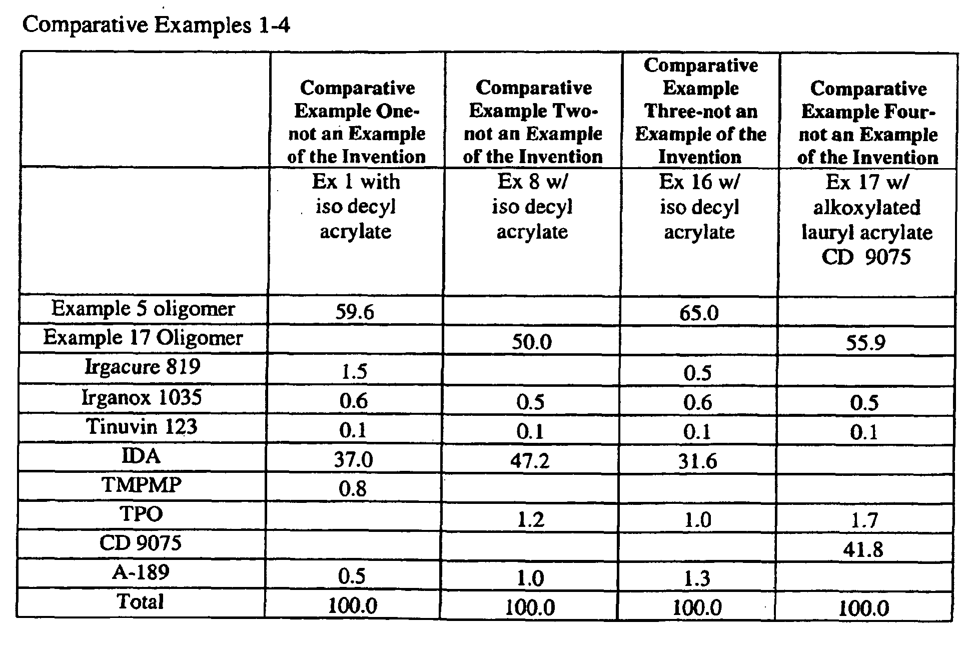

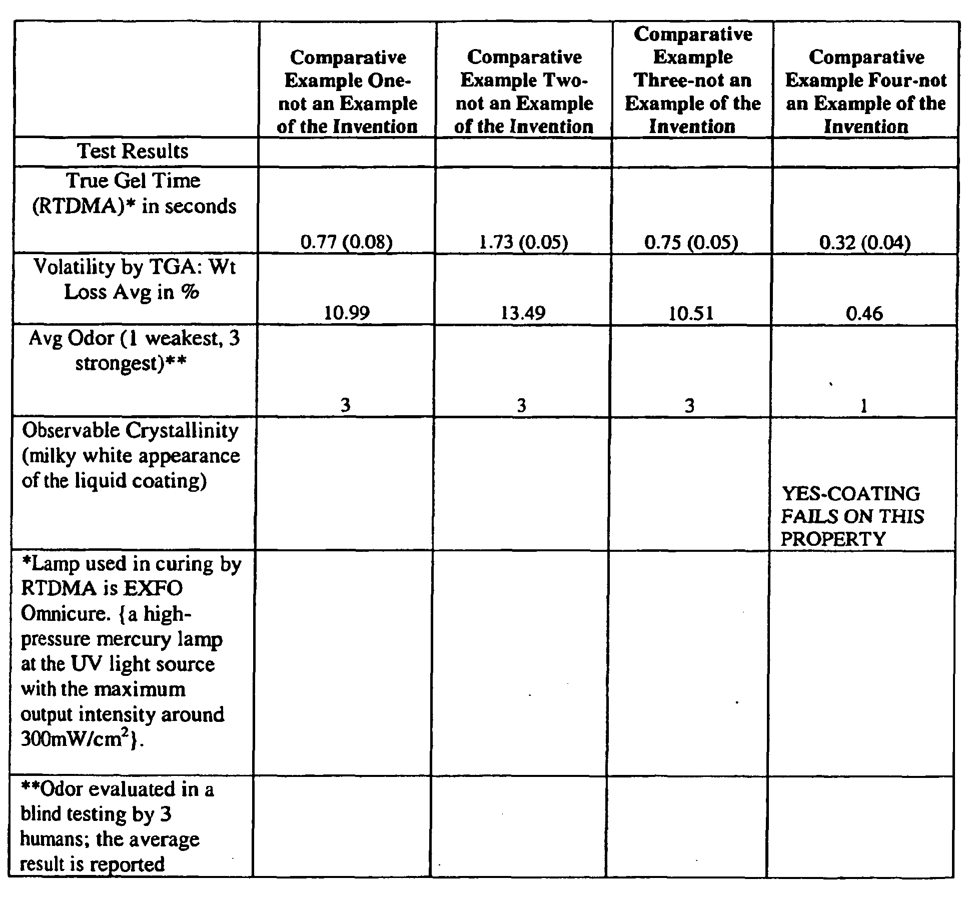

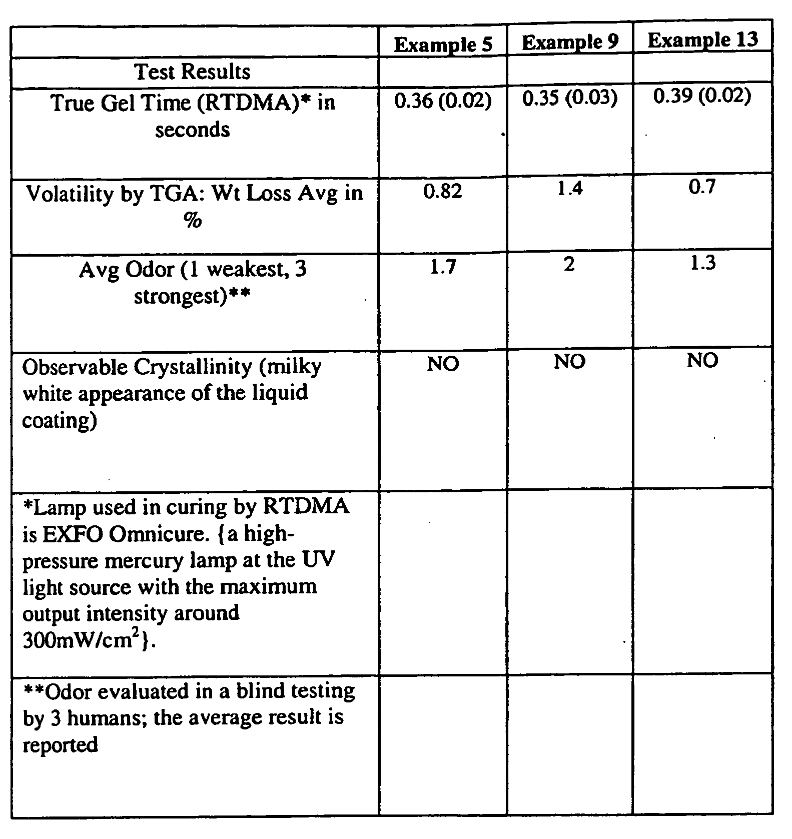

The use of the terms "a" and "an" and "the" and similar referents in the context of describing the invention (especially in the context of the following claims) are to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

## Claims

1. A radiation curable optical fiber primary coating composition comprising, in the uncured state, from 50 % to 65 % by weight of the composition, an oligomer comprising the reaction product of:
a) at least one polyether polyol having a molecular weight of from 3500 g/mol to 10 000 g/mol,
b) at least one diisocyanate selected from the group consisting of an aromatic diisocyanate, an aliphatic diisocyanate, and mixtures thereof,
c) at least one hydroxyl terminated acrylate or (meth)acrylate, and
d) optionally, an alcohol;
from 30 % to 50 % by weight of the composition, a reactive diluent monomer blend comprising at least two reactive diluent monomers, wherein each of said monomers in said blend comprises at least one phenyl group or phenoxy group, and at least one acrylate group, having the formula: 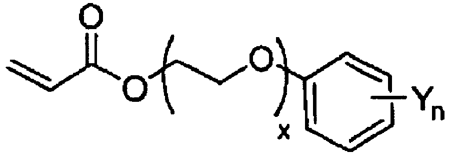 wherein x is an integer of from 1 to 6; n is an integer of from 1 to 5; and each Y, which may be the same or different, is independently selected from the group consisting of hydrogen, a C₁ to C₁₂ alkyl group and an alkarylalkoxylated acrylate radical; and at least one photoinitiator; said reactive diluent monomer blend being substantially free of non-aryl reactive diluent monomers; wherein when an aryl reactive diluent monomer is present that has a molecular weight less than about 300, it is present at no more than about 10 wt.% of the total formulation,
wherein said primary composition includes, based on the weight of the composition, less than 0.4 % by weight of alkyl monomers that do not include a phenyl group or phenoxy group, and
wherein the total amount of oligomer and reactive diluent monomer blend is from 85 % to 98 % by weight of the coating composition.

2. The coating composition of claim 1, wherein the polyol has a molecular weight of from 3500 g/mol to 4500 g/mol, preferably of about 4000 g/mol.

3. The coating composition of claim 1 or 2, wherein the composition comprises, in the uncured state, from 55 % to 65 % by weight of the composition, of the oligomer.

4. The coating composition of any one of claims 1-3, wherein the at least one diisocyanate is selected from the group consisting of an aromatic diisocyanate, an aliphatic diisocyanate, and a mixture of an aromatic diisocyanate and an aliphatic diisocyanate.

5. The coating composition of any one of claims 1-4, wherein the reaction product of the at least one polyol, at least one diisocyanate, at least one hydroxyl terminated acrylate or (meth)acrylate, and optionally an alcohol is a liquid at room temperature.

6. The coating composition of any one of claims 1-5, wherein the photoinitiator is *bis*(2,4,6-trimethylbenzoyl)phenylphosphine oxide or 2,4,6-trimethylbenzoyl-diphenylphosphine oxide.

7. The coating composition of any one of claims 1-6, wherein the reactive diluent monomers in the reactive diluent monomer blend have the formula: 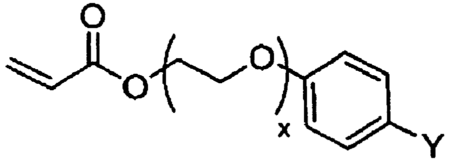 wherein x is from 1 to 6 and Y is independently selected from the group consisting of hydrogen, a C₁ to C₁₂ alkyl group, and an alkarylalkoxylated acrylate radical; and at least one photoinitiator; said reactive diluent monomer blend being substantially free of non-aryl reactive diluent monomers; wherein when an aryl reactive diluent monomer is present that has a molecular weight less than about 300, it is present at no more than about 10 wt.% of the total formulation.

8. The coating composition of any one of claims 1-7 wherein the reactive diluent monomer blend consists essentially of at least two monomers selected from the group consisting of ethoxylated nonylphenol acrylate, ethoxylated bisphenol A diacrylate and 2-phenoxyethyl acrylate.

9. The coating composition of any one of claims 1-8, wherein the reactive diluent monomer blend comprises from 30 % to 42 % by weight of the coating composition.

10. The coating composition of any one of claims 1-9, further comprising at least one additive selected from the group consisting of an antioxidant, an adhesion promoter, a light stabilizer, an inhibitor, a latent acid, and mixtures thereof.

11. The coating composition of any one of claims 1-10, wherein said coating composition has the following properties:
a) an *in-situ* modulus of from 0.1 MPa to 0.45 MPa after cure on fiber,
b) an *in-situ* Tg of less than -50 °C, preferably of less than -55 °C after cure on fiber, and/or
c) a tan (delta) of from 0.18 to 0.24 after cure on fiber, and/or
d) a storage modulus E' at -60 °C of up to 2100 MPa, preferably of from 1800 MPa to 2100 MPa, after cure as a film.

12. An optical fiber coated with the coating composition of any one of Claims 1-11.

13. The optical fiber of claim 12, having a maximum microbending sensitivity at 1625 nm, at -60 °C, second cycle, of less than 0.2 dB/km, preferably of from 0.01 to 0.15 dB/km, more preferably of from 0.012 to 0.146 dB/km.

14. The optical fiber of claim 12 or 13, wherein after initial cure and after one month aging at 85 °C and 85 % relative humidity, the % RAU is from 84 % to 99 %.

## Patentansprüche

1. Strahlungshärtbare primäre Beschichtungszusammensetzung für Glasfasern, umfassend, im ungehärteten Zustand, von 50 % bis 65 % nach Gewicht der Zusammensetzung, ein Oligomer, umfassend das Reaktionsprodukt von:
a) mindestens einem Polyetherpolyol mit einem Molekulargewicht von 3.500 g/mol bis 10.000 g/mol,
b) mindestens einem Diisocyanat, ausgewählt aus der Gruppe, bestehend aus einem aromatischen Diisocyanat, einem aliphatischen Diisocyanat und Gemischen davon,
c) mindestens einem Hydroxyl-terminierten Acrylat oder (Meth)acrylat und
d) optional, einem Alkohol;
von 30 % bis 50 %, nach Gewicht der Zusammensetzung, ein Reaktivverdünnermonomer-Gemisch, umfassend mindestens zwei Reaktivverdünnermonomere, wobei jedes der Monomere in dem Gemisch mindestens eine Phenylgruppe oder Phenoxygruppe und mindestens eine Acrylatgruppe umfasst, mit der Formel: 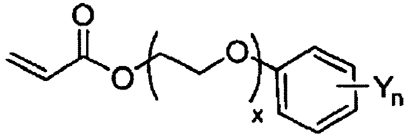 wobei x eine ganze Zahl von 1 bis 6 ist; n eine ganze Zahl von 1 bis 5 ist; und jedes Y, das gleich oder verschieden sein kann, unabhängig ausgewählt ist aus der Gruppe, bestehend aus Wasserstoff, einer C₁ bis C₁₂ Alkylgruppe und einem alkarylalkoxylierten Acrylat-Radikal; und mindestens einem Fotoinitiator; das Reaktivverdünnermonomer-Gemisch im Wesentlichen frei von nicht-Aryl Reaktivverdünnermonomeren ist; wobei, wenn ein Arylreaktives Verdünnermonomer anwesend ist, das ein Molekulargewicht von weniger als ungefähr 300 hat, es in nicht mehr als ungefähr 10 Gew.-% der Gesamtformulierung anwesend ist,
wobei die primäre Zusammensetzung, basierend auf dem Gewicht der Zusammensetzung, weniger als 0,4 % nach Gewicht von Alkylmonomeren, die keine Phenylgruppe oder Phenoxygruppe enthalten, enthält, und
wobei die Gesamtmenge von Oligomer und Reaktivverdünnermonomer-Gemisch von 85 % bis 98 % nach Gewicht der Beschichtungszusammensetzung ist.

2. Beschichtungszusammensetzung nach Anspruch 1, wobei das Polyol ein Molekulargewicht von 3.500 g/mol bis 4.500 g/mol, bevorzugt von ungefähr 4.000 g/mol, hat.

3. Beschichtungszusammensetzung nach Anspruch 1 oder 2, wobei die Zusammensetzung, in dem ungehärteten Zustand, von 55 % bis 65 % nach Gewicht der Zusammensetzung, des Oligomers umfasst.

4. Beschichtungszusammensetzung nach einem der Ansprüche 1-3,
wobei das mindestens eine Diisocyanat ausgewählt ist aus der Gruppe, bestehend aus einem aromatischen Diisocyanat, einem aliphatischen Diisocyanat und einem Gemisch aus einem aromatischen Diisocyanat und einem aliphatischen Diisocyanat.

5. Beschichtungszusammensetzung nach einem der Ansprüche 1-4,
wobei das Reaktionsprodukt des mindestens einen Polyols, mindestens einen Diisocyanats, mindestens einen Hydroxyl-terminierten Acrylats oder (Meth)acrylats und optional eines Alkohols eine Flüssigkeit bei Raumtemperatur ist.

6. Beschichtungszusammensetzung nach einem der Ansprüche 1-5,
wobei der Fotoinitiator Bis(2,4,6-trimethylbenzoyl)phenylphosphinoxid oder 2,4,6-Trimethylbenzoyl-diphenylphosphinoxid ist.

7. Beschichtungszusammensetzung nach einem der Ansprüche 1-6,
wobei die Reaktivverdünnermonomere in dem Reaktivverdünnermonomer-Gemisch folgende Formel haben: 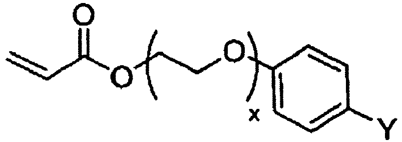 wobei x eine ganze Zahl von 1 bis 6 ist und Y unabhängig ausgewählt ist aus der Gruppe, bestehend aus Wasserstoff, einer C₁ bis C₁₂ Alkylgruppe und einem alkarylalkoxylierten Acrylat-Radikal; und mindestens einem Fotoinitiator; das Reaktivverdünnermonomer-Gemisch im Wesentlichen frei von nicht-Aryl Reaktivverdünnermonomeren ist; wobei, wenn ein Aryl-Reaktivverdünnermonomer anwesend ist, das ein Molekulargewicht von weniger als ungefähr 300 hat, es in nicht mehr als ungefähr 10 Gew.-% der Gesamtformulierung anwesend ist.

8. Beschichtungszusammensetzung nach einem der Ansprüche 1-7,
wobei das Reaktivverdünnermonomer-Gemisch im Wesentlichen aus mindestens zwei Monomeren besteht, ausgewählt aus der Gruppe bestehend aus ethoxyliertem Nonylphenolacrylat, ethoxyliertem Bisphenol-A-Diacrylat und 2-Phenoxyethylacrylat.

9. Beschichtungszusammensetzung nach einem der Ansprüche 1-8,
wobei das Reaktivverdünnermonomer-Gemisch von 30 % bis 42 % nach Gewicht der Beschichtungszusammensetzung umfasst.

10. Beschichtungszusammensetzung nach einem der Ansprüche 1-9, ferner umfassend mindestens einen Zusatzstoff, ausgewählt aus der Gruppe bestehend aus einem Antioxidans, einem Adhäsionspromotor, einem Lichtstabilisator, einem Inhibitor, einer latenten Säure und Gemischen davon.

11. Beschichtungszusammensetzung nach einem der Ansprüche 1-10, wobei die Beschichtungszusammensetzung die folgenden Eigenschaften hat:
a) einen *In-situ-*Modul von 0,1 MPa bis 0,45 MPa nach Härtung auf Faser,
b) einen *In-situ-*Tg von weniger als -50°C, bevorzugt von weniger als - 55°C, nach Härtung auf Faser, und/oder
c) einen Tan (Delta) von 0,18 bis 0,24, nach Härtung auf Faser, und/oder
d) einen Speichermodul E' bei -60°C von bis zu 2.100 MPa, bevorzugt von 1.800 MPa bis 2.100 MPa, nach Härtung als eine Folie.

12. Glasfaser, beschichtet mit der Beschichtungszusammensetzung nach einem der Ansprüche 1-11.

13. Glasfaser nach Anspruch 12, mit einer maximalen Mikrobiegungsempfindlichkeit bei 1.625 nm, bei -60°C, zweiter Zyklus, von weniger als 0,2 dB/km, bevorzugt von 0,01 bis 0,15 dB/km, bevorzugter von 0,012 bis 0,146 dB/km.

14. Glasfaser nach Anspruch 12 oder 13, wobei nach anfänglicher Härtung und nach einem Monat Alterung bei 85°C und 85 % relativer Feuchtigkeit der % RAU von 84 % bis 99 % ist.

## Revendications

1. Composition de revêtement primaire de fibres optiques durcissable par radiations comprenant, à l'état non durci, de 50 à 65 % en poids de la composition, d'un oligomère comprenant le produit de la réaction de :
a) au moins un polyéther polyol ayant un poids moléculaire de 3500 à 10 000 g/mol,
b) au moins un diisocyanate choisi dans le groupe constitué par un diisocyanate aromatique, un diisocyanate aliphatique, et leurs mélanges,
c) au moins un acrylate ou (méth)acrylate à terminaisons hydroxyle, et
d) éventuellement, un alcool ;
de 30 à 50 % en poids de la composition, d'un mélange de monomères de type diluant réactif comprenant au moins deux monomères de type diluant réactif, dans lequel chacun desdits monomères dans ledit mélange comprend au moins un groupe phényle ou un groupe phénoxy, et au moins un groupe acrylate, de formule : 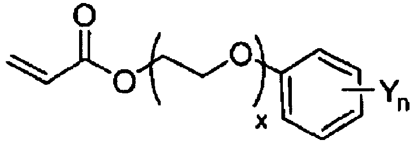 dans laquelle x est un entier de 1 à 6 ; n est un entier de 1 à 5 ; et chaque Y, qui peuvent être identiques ou différents, est indépendamment choisi dans le groupe constitué par un atome d'hydrogène, un groupe alkyle C₁ à C₁₂ et un radical acrylate alkarylalcoxylé ; et au moins un photo-amorceur ; ledit mélange de monomères de type diluant réactif étant sensiblement exempt de monomères de type diluant réactif non-aryle ; dans laquelle, quand un monomère de type diluant réactif aryle ayant un poids moléculaire inférieur à environ 300 est présent, il est présent en une quantité égale ou inférieure à environ 10 % en poids de la formulation totale,
dans laquelle ladite composition primaire contient, sur la base du poids de la composition, moins de 0,4 % en poids de monomères alkyle ne contenant pas de groupe phényle ou de groupe phénoxy, et
dans laquelle la quantité totale de l'oligomère et du mélange de monomères de type diluant réactif représente de 85 à 98 % en poids de la composition de revêtement.

2. Composition de revêtement selon la revendication 1, dans laquelle le polyol a un poids moléculaire de 3500 à 4500 g/mol, de préférence d'environ 4000 g/mol.

3. Composition de revêtement selon la revendication 1 ou 2, dans laquelle la composition comprend, à l'état non durci, de 55 à 65 % en poids de la composition, de l'oligomère.

4. Composition de revêtement selon l'une quelconque des revendications 1 à 3, dans laquelle le au moins un diisocyanate est choisi dans le groupe constitué par un diisocyanate aromatique, un diisocyanate aliphatique, et un mélange de diisocyanate aromatique et de diisocyanate aliphatique.

5. Composition de revêtement selon l'une quelconque des revendications 1 à 4, dans laquelle le produit de la réaction du au moins un polyol, du au moins un diisocyanate, du au moins un acrylate ou (méth)acrylate à terminaisons hydroxyle, et éventuellement, d'un alcool est un liquide à température ambiante.

6. Composition de revêtement selon l'une quelconque des revendications 1 à 5, dans laquelle le photo-amorceur est un oxyde de bis(2,4,6-triméthyl-benzoyl)phénylphosphine ou un oxyde de 2,4,6-triméthylbenzoyl-diphénylphosphine.

7. Composition de revêtement selon l'une quelconque des revendications 1 à 6, dans laquelle les monomères de type diluant réactif dans le mélange de monomères de type diluant réactif répondent à la formule : 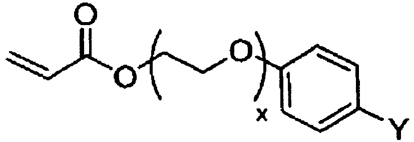 dans laquelle x vaut de 1 à 6 et Y est indépendamment choisi dans le groupe constitué par un atome d'hydrogène, un groupe alkyle C₁ à C₁₂ et un radical acrylate alkarylalcoxylé ; et au moins un photo-amorceur ; ledit mélange de monomères de type diluant réactif étant sensiblement exempt de monomères de type diluant réactif non-aryle ; dans laquelle, quand un monomère de type diluant réactif aryle ayant un poids moléculaire inférieur à environ 300 est présent, il est présent en une quantité égale ou inférieure à environ 10 % en poids de la formulation totale.

8. Composition de revêtement selon l'une quelconque des revendications 1 à 7, dans laquelle le mélange de monomères de type diluant réactif est essentiellement constitué d'au moins deux monomères choisis dans le groupe constitué par l'acrylate de nonylphénol éthoxylé, le diacrylate de bisphénol A éthoxylé et l'acrylate de 2-phénoxyéthyle.

9. Composition de revêtement selon l'une quelconque des revendications 1 à 8, dans laquelle le mélange de monomères de type diluant réactif représente de 30 à 42 % en poids de la composition de revêtement.

10. Composition de revêtement selon l'une quelconque des revendications 1 à 9, comprenant en outre au moins un additif choisi dans le groupe constitué par un antioxydant, un promoteur d'adhérence, un stabilisant lumière, un inhibiteur, un acide latent, et leurs mélanges.

11. Composition de revêtement selon l'une quelconque des revendications 1 à 10, dans laquelle ladite composition de revêtement présente les propriétés suivantes :
a) un module *in situ* de 0,1 à 0,45 MPa après durcissement sur fibre,
b) une Tg *in situ* inférieure à -50 °C, de préférence inférieure à -55 °C après durcissement sur fibre, et/ou
c) un (delta) tan de 0,18 à 0,24 après durcissement sur fibre, et/ou
d) un module en stockage E' à -60 °C jusqu'à 2100 MPa, de préférence de 1800 à 2100 MPa, après durcissement sous forme de film.

12. Fibre optique revêtue avec la composition de revêtement selon l'une quelconque des revendications 1 à 11.

13. Fibre optique selon la revendication 12, ayant une sensibilité à la microcourbure maximale à 1625 nm, à -60 °C, second cycle, inférieure à 0,2 dB/km, de préférence de 0,01 à 0,15 dB/km, de préférence encore de 0,012 à 0,146 dB/km.

14. Fibre optique selon la revendication 12 ou 13, dans laquelle après le durcissement initial et après un vieillissement d'au moins un mois à 85 °C et à une humidité relative de 85 %, la RAU en % est de 84 à 99 %.
